# EUROPEAN PATENT APPLICATION

(11) **EP 1 852 667 A1**
(43) Date of publication of application: **07.11.2007**
(21) Application number: 07005460.6
(22) Date of filing: 16.03.2007
(51) Int. Cl.: F27D 5/00

(54) **Degreasing jig assembling apparatus, degreasing jig disassembling apparatus, degreasing jig circulating apparatus, method for degreasing ceramic molded body, and method for manufacturing honeycomb structured body**

(30) Priority: 01.05.2006 JP 2006309116
(71) Applicant: IBIDEN CO., LTD., Ogaki-shi Gifu 503-8604 (JP)
(72) Inventor: Kawai, Tsuyoshi, Ibigawacho, Ibi-gun, Gifu 501-0695 (JP); Saijo, Takamitsu, Neumann Janos u.1, 2326 Hungary (HU); Kasai, Kenichiro, Ibigawacho, Ibi-gun, Gifu 501-0695 (JP)
(74) Representative: HOFFMANN EITLE

(57) **Abstract**

A main object of the present invention is to provide a degreasing jig circulating apparatus which can degrease a ceramic molded body efficiently, while reducing the need for manual labor, and the degreasing jig circulating apparatus of the present invention is a degreasing jig circulating apparatus comprising:
a degreasing jig assembling apparatus; a degreasing furnace; a degreasing jig disassembling apparatus; a cover member transporting conveyor; and a bottomplate transporting conveyor,
wherein the degreasing jig assembling apparatus comprising: a molding body mounting mechanism that mounts the ceramic molded body at a predetermined position on the bottom plate placed on the table or the conveyor by using the robot arm; a cover member attaching mechanism that attaches the cover member to the bottom plate; and a jig delivering mechanism that delivers the degreasing jig to the degreasing furnace, the degreasing jig disassembling apparatus comprising: a jig receiving mechanism that receives the degreasing jig from the degreasing furnace; a cover member detaching mechanism that detaches the cover member attached on the bottom plate placed on the table or the conveyor, by using the robot arm; and a bottom plate delivering mechanism that delivers the bottom plate with the cover member being detached, to the bottom plate transporting conveyor.

## Description

### TECHNICAL FIELD

The present invention relates to a degreasing jig assembling apparatus, a degreasing jig disassembling apparatus, a degreasing jig circulating apparatus, a method for degreasing a ceramic molded body, and a method for manufacturing a honeycomb structured body.

### BACKGROUND ART

In recent years, particulates such as soot contained in exhaust gases that are discharged from internal combustion engines of vehicles, such as buses and trucks, and construction machines, have raised serious problems as contaminants harmful to the environment and the human body.
Various honeycomb filters using honeycomb structured bodies made from porous ceramic materials, which serve as filters that collect particulates in exhaust gases to purify the exhaust gases, have been proposed.

Conventionally, upon manufacturing a honeycomb structured body, first, a wet mixture is prepared by mixing ceramic powder, a binder and a dispersant solution and the like with one another. Moreover, the wet mixture is continuously extrusion-molded through a die, and the extrusion-molded body is cut into a predetermined length so that a pillar-shaped honeycomb molded body is manufactured.

Next, the resulting honeycomb molded body is dried by using a microwave drying apparatus or a hot-air drying apparatus.
Thereafter, the end portions of this honeycomb molded body are plugged by a plug material paste mainly composed of the ceramic powder into a diced pattern, and then respective degreasing and firing processes are carried out so that a honeycomb fired body is manufactured.

Thereafter, a sealing material paste is applied to the side faces of the honeycomb fired body, and the honeycomb fired bodies are mutually bonded to each other through an adhesive so that an aggregate of the honeycomb fired bodies in which a number of the honeycomb fired bodies are combined with one another by interposing the sealing material layers (adhesive layers) is manufactured. Next, the resulting aggregate of the honeycomb fired bodies is cut and machined into a predetermined shape, such as a cylindrical shape and an cylindroid shape, by using a cutting tool or the like so that a honeycomb block is formed, and lastly, a sealing material paste is applied onto the periphery of the honeycomb block to form a sealing material layer (coat layer) ; thus, the manufacturing of the honeycomb structured body is completed.

In such a method for manufacturing a honeycomb structured body, the degreasing process is normally carried out on a honeycomb molded body placed on a degreasing jig.
Moreover, during the degreasing process, a large amount of organic components, liquids such as organic substances and moisture, and gases are generated, and these adhere to wall faces (in particular, wall faces on the upper side) of a degreasing furnace to form a tar-like matter, which tend to drop onto the honeycomb molded body; therefore, with respect to the degreasing jig, a degreasing jig comprised of two plate-shaped bodies and a supporting member has been proposed (for example, see Patent Document 1).

Here, the above-mentioned degreasing jig is normally used repeatedly.
For example, Patent Document 2 has disclosed a method in which, in order to repeatedly use a receiving base on which honeycomb molded bodies are placed, the receiving base is circulated.

Patent Document 1: JP-A 2001-19560
Patent Document 2: WO 2005/024326 A1

### DISCLOSURE OF THE INVENTION

### PROBLEMS TO BE SOLVED BY THE INVENTION

In the case where a degreasing process is carried out on a honeycomb molded body by using a degreasing jig constituted by a plurality of members as disclosed by Patent Document 1, it is necessary to carry out processes such as a degreasing jig assembling process used for placing a honeycomb molded body in a degreasing jig prior to the degreasing process and a degreasing jig disassembling process used for taking out the honeycomb molded body that has been degreased from the degreasing jig after the degreasing process, and in an attempt to use the degreasing jig repeatedly, after use, the degreasing jig needs to be transported to an apparatus used in the degreasing jig assembling process. In the case where these operations are carried out through manual labor, it sometimes becomes difficult to improve the working speed and productivity.
Moreover, since the receiving base to be repeatedly used, disclosed in Patent Document 2, is configured to carry out a drying process on a honeycomb molded body, its heat resistant temperature is too low to be used for a degreasing process, and since the receiving base has a structure on which a honeycomb molded body is simply placed, it is not applicable to the above-mentioned degreasing method using the degreasing jig constituted by a plurality of members.

### MEANS FOR SOLVING THE PROBLEMS

The present inventors have intensively studied so as to solve the above-mentioned problems, and have completed the present invention.
In other words, a degreasing jig assembling apparatus in accordance with the present invention is a degreasing jig assembling apparatus comprising a robot arm; and a table or a conveyor on which a degreasing jig comprising a bottom plate and a cover member is placed, a ceramic molded body being mounted on the degreasing jig upon degreasing the ceramic molded body, the ceramic molded body being mounted on the degreasing jig on the table or the conveyor, wherein the degreasing jig assembling apparatus further comprising: a molding body mounting mechanism that mounts the ceramic molded body at a predetermined position on the bottom plate placed on the table or the conveyor by using the robot arm; and a cover member attaching mechanism that attaches the cover member to the bottom plate in a manner so as to cover the ceramic molded body mounted on the bottom plate.

In the above-mentioned degreasing jig assembling apparatus, desirably, the conveyor moves intermittently, and upon stopping of the conveyor, the conveyor shifts from a moving state at a moving speed of 1.5 m/min or less to a stopped state.

A degreasing jig disassembling apparatus in accordance with the present invention is a degreasing jig disassembling apparatus comprising: a robot arm; and a table or a conveyor on which a degreasing jig comprising a bottom plate and a cover member is placed, a ceramic molded body being mounted on the degreasing jig upon degreasing the ceramic molded body, the degreasing jig on which the ceramic molded body is mounted being disassembled on the table or the conveyor, wherein the degreasing jig disassembling apparatus further comprising a cover member detaching mechanism that detaches the cover member attached in a manner so as to cover the ceramic molded body mounted on the bottom plate placed on the table or the conveyor, by using the robot arm.

In the above-mentioned degreasing jig disassembling apparatus, desirably, the conveyor moves intermittently, and upon stopping of the conveyor, the conveyor shifts from a moving state at a moving speed of 1.5 m/min or less to a stopped state.

A degreasing jig circulating apparatus in accordance with the present invention is a degreasing jig circulating apparatus comprising: a degreasing jig assembling apparatus comprising a robot arm, and a table or a conveyor on which a degreasing jig comprising a bottom plate and a cover member is placed, a ceramic molded body being mounted on the degreasing jig upon degreasing the ceramic molded body, the ceramic molded body being mounted on the degreasing jig on the table or the conveyor; a degreasing furnace that degreases the ceramicmoldedbodymounted on the degreasing jig; a degreasing jig disassembling apparatus comprising a robot arm, and a table or a conveyor on which the degreasing jig is placed, the degreasing jig on which the ceramic molded body is mounted being disassembled on the table or the conveyor; a cover member transporting conveyor that transports the cover member that has been detached by the degreasing jig disassembling apparatus to the degreasing jig assembling apparatus; and a bottom plate transporting conveyor that transports the bottom plate on which the ceramic molded body is mounted, with the cover member being detached, wherein the degreasing jig assembling apparatus comprising: a molding body mounting mechanism that mounts the ceramic molded body at a predetermined position on the bottom plate placed on the table or the conveyor by using the robot arm; a cover member attaching mechanism that attaches the cover member to the bottom plate in a manner so as to cover the ceramic molded body mounted on the bottom plate; and a jig delivering mechanism that delivers the degreasing jig on which the ceramic molded body is mounted to the degreasing furnace, the degreasing jig disassembling apparatus comprising: a jig receiving mechanism that receives the degreasing jig on which the ceramic molded body is mounted from the degreasing furnace; a cover member detaching mechanism that detaches the cover member attached in a manner so as to cover the ceramic molded body mounted on the bottom plate placed on the table or the conveyor, by using the robot arm; and a bottom plate delivering mechanism that delivers the bottom plate on which the ceramic molded body is mounted, with the cover member being detached, to the bottom plate transporting conveyor.

In the above-mentioned degreasing jig circulating apparatus, desirably, the conveyor in the degreasing jig assembling apparatus and/or the degreasing jig disassembling apparatus moves intermittently, and upon stopping of the conveyor, the conveyor shifts from a moving state at a moving speed of 1.5 m/min or less to a stopped state.

A method for degreasing a ceramic molded body in accordance with the present invention is a method for degreasing a ceramic molded body comprising degreasing the ceramic molded body by passing a degreasing jig on which the ceramic molded body is mounted through inside of a degreasing furnace, using a degreasing jig circulating apparatus, the degreasing jig circulating apparatus comprising: a degreasing jig assembling apparatus comprising a robot arm, and a table or a conveyor on which the degreasing jig comprising a bottom plate and a cover member is placed, the ceramic molded body being mounted on the degreasing jig upon degreasing the ceramic molded body, the ceramic molded body being mounted on the degreasing jig on the table or the conveyor; the degreasing furnace that degreases the ceramic molded body mounted on the degreasing jig; a degreasing jig disassembling apparatus comprising a robot arm, and a table or a conveyor on which the degreasing jig is placed, the degreasing jig on which the ceramic molded body is mounted being disassembled on the table or the conveyor; a cover member transporting conveyor that transports the cover member that has been detached by the degreasing jig disassembling apparatus to the degreasing jig assembling apparatus; and a bottom plate transporting conveyor that transports the bottom plate on which the ceramic molded body is mounted, with the cover member being detached, wherein the degreasing jig assembling apparatus comprising: a molding body mounting mechanism that mounts the ceramic molded body at a predetermined position on the bottom plate placed on the table or the conveyor by using the robot arm; a cover member attaching mechanism that attaches the cover member to the bottom plate in a manner so as to cover the ceramic molded body mounted on the bottom plate; and a jig delivering mechanism that delivers the degreasing jig on which the ceramic molded body is mounted to the degreasing furnace, the degreasing jig disassembling apparatus comprising: a jig receiving mechanism that receives the degreasing jig on which the ceramic molded body is mounted from the degreasing furnace; a cover member detaching mechanism that detaches the cover member attached in a manner so as to cover the ceramic molded body mounted on the bottom plate placed on the table or the conveyor, by using the robot arm; and a bottom plate delivering mechanism that delivers the bottom plate on which the ceramic molded body is mounted, with the cover member being detached, to the bottom plate transporting conveyor.

In the above-mentioned method for degreasing a ceramic molded body, desirably, the conveyor in the degreasing jig assembling apparatus and/or the degreasing jig disassembling apparatus moves intermittently, and upon stopping of the conveyor, the conveyor shifts from a moving state at a moving speed of 1.5 m/min or less to a stopped state.

In the above-mentioned method for degreasing a ceramic molded body, desirably, the bottom plate is also used as a firing jig.

A method for manufacturing a honeycomb structured body in accordance with the present invention is a method for manufacturing a honeycomb structured body comprising a honeycomb fired body, including: producing a pillar-shaped honeycomb molded body having a large number of cells longitudinally placed in parallel with one another with a cell wall therebetween by molding a ceramic material, degreasing the honeycomb molded body mounted on a degreasing jig; and firing the degreased honeycomb molded body to manufacture a honeycomb fired body, wherein the degreasing of the honeycomb molded body is carried out by using a degreasing jig circulating apparatus, the degreasing jig circulating apparatus comprising: a degreasing jig assembling apparatus comprising a robot arm, and a table or a conveyor on which a degreasing jig comprising a bottom plate and a cover member is placed, a honeycomb molded body being mounted on the degreasing jig upon degreasing the honeycomb molded body, the honeycomb molded body being mounted on the degreasing jig on the table or the conveyor; a degreasing furnace that degreases the honeycomb molded body mounted on the degreasing jig; a degreasing jig disassembling apparatus comprising a robot arm, and a table or a conveyor on which the degreasing jig is placed, the degreasing jig on which the honeycomb molded body is mounted being disassembled on the table or the conveyor; a cover member transporting conveyor that transports the cover member that has been detached by the degreasing jig disassembling apparatus to the degreasing jig assembling apparatus; and a bottom plate transporting conveyor that transports the bottom plate on which the honeycomb molded body is mounted, with the cover member being detached, the degreasing jig assembling apparatus comprising: a molding body mounting mechanism that mounts the honeycomb molded body at a predetermined position on the bottom plate placed on the table or the conveyor by using the robot arm; a cover member attaching mechanism that attaches the cover member to the bottom plate in a manner so as to cover the honeycomb molded body mounted on the bottom plate; and a jig delivering mechanism that delivers the degreasing jig on which the honeycomb molded body is mounted to the degreasing furnace, the degreasing jig disassembling apparatus comprising: a jig receiving mechanism that receives the degreasing jig on which the honeycomb molded body is mounted from the degreasing furnace; a cover member detaching mechanism that detaches the cover member attached in a manner so as to cover the honeycomb molded body mounted on the bottom plate placed on the table or the conveyor, by using the robot arm; and a bottom plate delivering mechanism that delivers the bottom plate on which the honeycomb molded body is mounted, with the cover member being detached, to the bottom plate transporting conveyor.
In the present specification, the shape indicated by the word "pillar" refers to any desired shape of a pillar including a round pillar, an oval pillar, a polygonal pillar and the like.

In the above-mentioned method for manufacturing a honeycomb structured body of the present invention, desirably, the conveyor in the degreasing jig assembling apparatus and/or the degreasing jig disassembling apparatus moves intermittently, and upon stopping of the conveyor, the conveyor shifts from a moving state at a moving speed of 1.5 m/min or less to a stopped state.

In the above-mentioned method for manufacturing a honeycomb structured body, desirably, the bottom plate is also used as a firing jig.
Moreover, desirably, the bottom plate transporting conveyor transports the bottom plate on which the honeycomb molded body is mounted, with the cover member being detached, to the firing of the honeycomb molded body.

### EFFECTS OF THE INVENTION

The degreasing jig assembling apparatus of the present invention, which is provided with a robot arm and a table or a conveyor, automatically carries out a mounting process of a ceramic molded body on a degreasing jig so that the ceramic molded body can be placed on the degreasing jig efficiently without the need for manual labor.

The degreasing jig disassembling apparatus of the present invention, which is provided with a robot arm and a table or a conveyor, automatically carries out a disassembling process of a degreasing jig on which a ceramic molded body is mounted so that the degreasing jig can be disassembled efficiently without the need for manual labor.

The degreasing jig circulating apparatus of the present invention, which is provided with a degreasing jig assembling apparatus, a degreasing furnace, a degreasing jig disassembling apparatus, a cover member transporting conveyor and a bottom plate transporting conveyor, can automatically carry out a sequence of processes including a process for mounting a ceramic molded body on the degreasing jig, a degreasing process, a disassembling process of the degreasing jig, a process for transporting a cover member to the degreasing jig assembling apparatus and a process for transporting the bottom plate to the post process; therefore, it is possible to degrease the ceramic molded body efficiently without the need for manual labor, and also to use the cover member repeatedly.

In the method for degreasing a ceramic molded body of the present invention, since the degreasing jig circulating apparatus, provided with the degreasing jig assembling apparatus, the degreasing furnace, the degreasing jig disassembling apparatus, the cover member transporting conveyor and the bottom plate transporting conveyor, is used, it becomes possible to automatically carry out a sequence of processes including a process for mounting a ceramic molded body on the degreasing jig, a degreasing process, a disassembling process of the degreasing jig, a process for transporting a cover member to the degreasing jig assembling apparatus and a process for transporting the bottom plate to the post process, and consequently to degrease the ceramic molded body efficiently without the need for manual labor.

In the method for manufacturing a honeycomb structured body in accordance with the present invention, since the degreasing jig circulating apparatus, provided with the degreasing jig assembling apparatus, the degreasing furnace, the degreasing jig disassembling apparatus, the cover member transporting conveyor and the bottom plate transporting conveyor, is used, it becomes possible to automatically carry out a sequence of degreasing processes for a honeycomb molded body including a process for mounting a ceramic molded body on the degreasing jig, a degreasing process, a disassembling process of the degreasing jig, a process for transporting a cover member to the degreasing jig assembling apparatus and a process for transporting the bottom plate to the post process, and consequently to efficiently manufacture a honeycomb structured body efficiently without the need for manual labor.

### BEST MODE FOR CARRYING OUT THE INVENTION

First, the following description will discuss a degreasing jig assembling apparatus in accordance with the present invention.
The degreasing jig assembling apparatus of the present invention is a degreasing jig assembling apparatus comprising a robot arm; and a table or a conveyor on which a degreasing jig comprising a bottom plate and a cover member is placed, a ceramic molded body being mounted on the degreasing jig upon degreasing the ceramic molded body, the ceramic molded body being mounted on the degreasing jig on the table or the conveyor, wherein the degreasing jig assembling apparatus further comprising: a molding body mounting mechanism that mounts the ceramic molded body at a predetermined position on the bottom plate placed on the table or the conveyor by using the robot arm; and a cover member attaching mechanism that attaches the cover member to the bottom plate in a manner so as to cover the ceramic molded body mounted on the bottom plate.

In the present specification, the robot arm refers to an arm that has active joints provided with motors and the like, and also has inactive joints without motors and the like, if necessary.

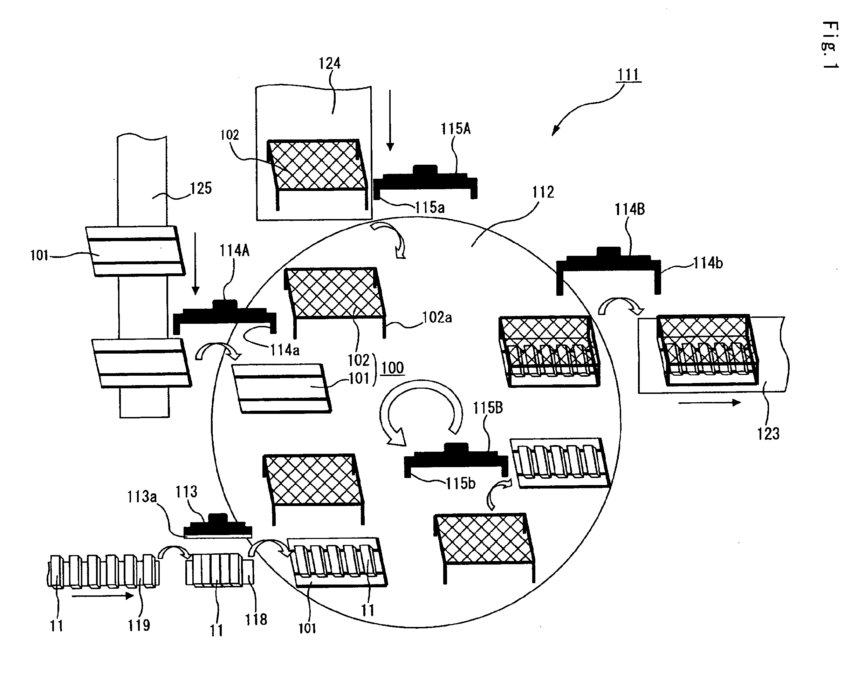

Fig. 1 is a conceptual view that schematically shows the outline of the degreasing jig assembling apparatus of the present invention.
As shown in Fig. 1, a degreasing jig assembling apparatus 111 is provided with one robot arm 113, two robot arms 114 (114A, 114B) and two robot arms 115 (115A, 115B), and is also provided with a rotation table 112 serving as a table on which a degreasing jig 100 for mounting a ceramic molded body 11 thereon is placed. Here, the degreasing jig 100 is comprised of a bottom plate 101 and a cover member 102.
This degreasing jig assembling apparatus 111 automatically carries out processes in which the ceramic molded body 11 is mounted on the bottom plate 101 and the cover member 102 is attached to the bottom plate 101 in a manner so as to cover the ceramic molded body 11.

In the degreasing jig assembling apparatus 111, the robot arm 113 has a suction mechanism, and has a function for suction-holding and transporting the ceramic molded body 11 by this mechanism, and each of the robot arms 114, 115 has a grasping mechanism, and has a function for transporting and assembling the degreasing jig 100 by this mechanism.
Therefore, in the degreasing jig assembling apparatus 111, the robot arm 113 is allowed to function as a molded body mounting mechanism.

In the degreasing jig assembling apparatus 111, the robot arms 113 to 115 have the above-mentioned mechanisms; however, each of the robot arms 113 to 115 may have both of the suction mechanism and the grasping mechanism, or may have only either one of the mechanisms.
Moreover, the robot arms 113 to 115 are provided with air cylinders, and thus allowed to move in vertical directions. Here, portions, extended from the cylinders, are engaged with ball screws placed in the horizontal direction, and allowed to move in the horizontal direction by the moving mechanisms utilizing the ball screws.

The degreasing jig 100 to be used in the degreasing jig assembling apparatus 111 is a degreasing jig comprised of a bottom plate and a cover member. Referring to the drawings, this degreasing jig will be explained below in detail.

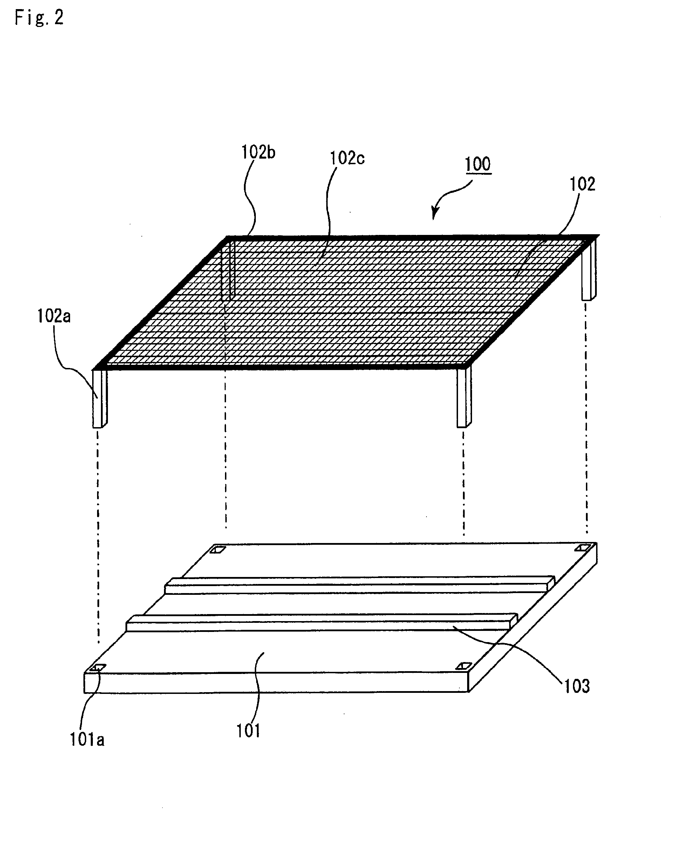

Fig. 2 is an exploded perspective view showing the degreasing jig.
As shown in Fig. 2, the degreasing jig 100 is comprised of a plate-shaped bottom plate 101 and a cover member 102 which comprises a flat net 102c with a frame member 102b being formed on the outer peripheral edge and supporting members 102a secured to four corners of this frame member 102b.
Here, through holes 101a for fitting the supporting members 102a provided to the cover member 102 thereto are formed on the bottom plate 101, and by fitting the supporting members 102a to these through holes 101a, the cover member 102 is attached to the bottom plate 101.

Moreover, although not shown in the bottom plate 101 of Fig. 2, the bottom plate that comprises the degreasing jig to be used in the present invention may have grooves formed on the bottom face, and in this case, the groove may have a shape that allows one portion of the grasping unit to be fitted thereto when the bottom plate is grasped by the robot arm. This structure allows the robot arm to positively grasp the bottom plate 101.

In the degreasing jig 100 having this structure, since the cover member 102 is attached in a manner so as to cover the ceramic molded body placed on the bottom plate 101, even in the case where, upon degreasing the ceramic molded body, a tar-state matter or the like, derived from the decomposed organic substance, drops thereon from above, the matter is prevented from coming into contact with the ceramic molded body, and since the periphery of the ceramic molded body is kept in an open state, it is possible to desirably carry out the degreasing process.

Moreover, on the bottom plate 101 of the degreasing jig 100 shown in Fig. 2, narrow band-shaped carbon fiber mats 103 are secured at two portions in parallel with each other so that the ceramic molded body is placed thereon through the carbon fiber mats 103. Here, the carbon fiber mats 103 may be included on demand.
The carbon fiber mats are provided so as to prevent the ceramic molded body from directly coming into contact with the upper face of the bottom plate, and any mat made from fibers other than the carbon fiber mat may be used as long as it has durability to the degreasing treatment temperature, and porous members, made from a ceramic material and the like, may be attached in place of the carbon fiber mats.

Here, the flat net forming the cover member is desirably made to have a mesh size (aperture diameter) in a range from 0.04 to 0.5 mm.
The mesh size of less than 0.04 mm makes it difficult for organic gases generated from the ceramic molded body during the degreasing process to pass through the flat net, with the result that the gases aggregate and adhere to the lower face of the flat net at portions having low furnace temperatures to form a tar-state matter or the like, which tends to drop onto the ceramic molded body to adhere thereto; in contrast, in the case where the mesh size exceeds 0.5 mm, upon degreasing the ceramic molded body, the tar-state matter or the like, derived from the decomposed organic substance, drops thereon fromanupperportion of the degreasing furnace, the mesh size exceeding 0.5 mm allows the tar-state matter or the like to pass through the flat net, dropping on the ceramic molded body to adhere thereto.
Here, the flat net portion in the cover member 102 may be formed by a simple plate-shaped member; however, it is desirable to form this portion by using a net-shaped member such as a flat net, a knitted net, a sintered metal net and metal fibers (sintered metal nonwoven fabric). This arrangement is suitable for preventing the tar-state matter or the like from adhering to the ceramic molded body, as described above.
Moreover, the flat net portion may be prepared as a plate-shaped member having a plurality of vents (passing holes) having a round shape, a polygonal shape or the like in the plan view.

In the degreasing jig assembling apparatus 111, first, the cover member 102, transported from the outside by a conveyor 124, is placed on the rotation table 112 by the robot arm 115A, while the bottom plate 101, transported from the outside by a conveyor 125, is placed on the rotation table 112 by the robot arm 114A. The robot arm 115A has a grasping mechanism so that the frame member 102b of the cover member 102 is grasped by the grasping unit 115a, and the cover member 102 is moved onto the rotation table 112.
Moreover, the robot arm 114A also has a grasping mechanism so that the bottom plate 101 is grasped by the grasping unit 114a, and the bottom member 101 is moved onto the rotation table 112.
Furthermore, in the case where the bottom plate 101 has grooves on the bottom face as described above, with respect to the robot arm 114A, a robot arm having convex-shaped claws on the inside of the tip of the grasping unit 114a is used so that the bottom plate 101 may be grasped by fitting these claws to the grooves.

In the degreasing jig assembling apparatus having the structure shown in Fig. 1, the number of the robot arms is not limited to five, and may be set to less than five, and in this case, one robot arm is configured to exert a plurality of functions.

Next, when the rotation table is shifted by about 1/4 rotation, a predetermined number (five in Fig. 1) of ceramic molded bodies 11 which, after having been transported from the outside by a molded body carry-in conveyor 119, are placed on a molded body receiving unit 118, with side faces being mutually made in contact with each other, are shifted by the robot arm 113 having the suction unit 113a, and placed on the bottom plate 101 with predetermined intervals.
The robot arm 113, which simultaneously suction-holds a plurality of ceramic molded bodies 11 (five in Fig. 1), arranges them on the bottom plate 101 with predetermined intervals. The reason for the arrangement of the ceramic molded bodies 11 with predetermined intervals is that, when the interval between the ceramic molded bodies is too narrow or too wide, deviations tend to occur in the degree of progress of the degreasing process of the respective ceramic molded bodies.

For this reason, desirably, the robot arm 113, which functions as a molded body mounting mechanism, is configured to place the ceramic molded bodies that have been suction-held on the bottom plate 101 with predetermined intervals. Specific examples of such a robot arm will be described later.
Here, the rotation table 112 repeats rotations and stoppages intermittently.
Here, the robot arm 113 simultaneously places a plurality of ceramic molded bodies 11 on the bottom plate 101; however, the degreasing jig assembling apparatus 111 may allow the robot arm 113 to place ceramic molded bodies 11 on the bottom plate 101 one by one.

Next, when the rotation table 112 rotates, the robot arm 115B is allowed to grasp the cover member 102 and attach it onto the bottom plate 101 on which the ceramic molded bodies 11 have been mounted, in a manner so as to cover the ceramic molded bodies 11. Here, the cover member 102 is provided with four rod-shaped supporting members 102a, and the cover member 102 is provided with through holes 101a (see Fig. 2) to which the supporting members 102a are fitted on the corner portions of the bottom plate 101; thus, the supporting members 102a are fitted to the through holes 101a so that the cover member 102 can be attached to the bottom plate 101.
Here, the degreasing jig having such a structure has already been explained by reference to Fig. 2; however, the degreasing jig to be used in the present invention is not necessarily required to have through holes formed in the bottom plate so as to be fitted to the supporting members, and in this case, the cover member is only placed on the bottom plate. Moreover, in addition to the through holes, the bottom plate may have a positional deviation preventive structure for the cover member.
Therefore, in the degreasing jig assembling apparatus 111, the robot arm 115B is allowed to function as a cover member attaching mechanism. Here, in the same manner as the robot arm 115A, the robot arm 115B is allowed to grasp the frame member 102b of the cover member 102 by the grasping unit 115b and move the cover member 102.

Next, when the rotation table 112 rotates, the ceramic molded body 11 is placed thereon, and a degreasing jig 100 to which the cover member 102 has been attached is placed on the conveyor 123 by the robot arm 114B, and transported to an apparatus used in the next process (for example, a degreasing process).
Here, in the same manner as the robot arm 114A, the robot arm 114B is also provided with a grasping mechanism so that, by grasping the bottom face with the grasping unit 114b, the degreasing jig 100 is transported onto the conveyor 123.

With respect to specific examples of a molded body carry-in conveyor 119 and conveyors 123 to 125 that are installed in the degreasing jig assembling apparatus 111, a belt conveyor, a chain conveyor, a roller conveyor, a pallet conveyor and the like are listed.

Next, referring to the drawings, the following description will discuss a specific example of the robot arm 113 that serves as a molded body mounting mechanism, which is installed in the degreasing jig assembling apparatus 111.

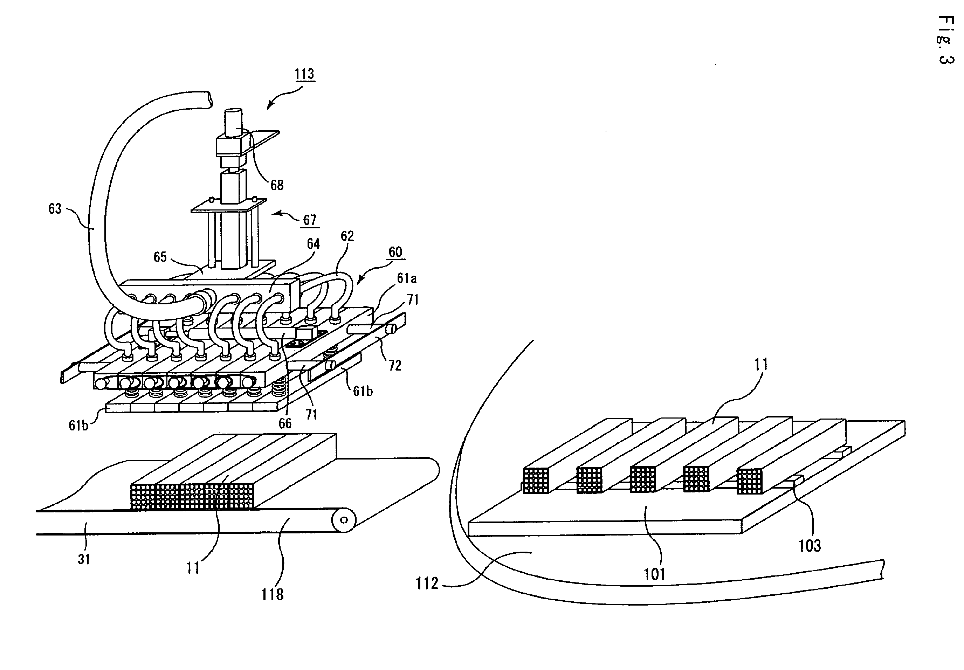

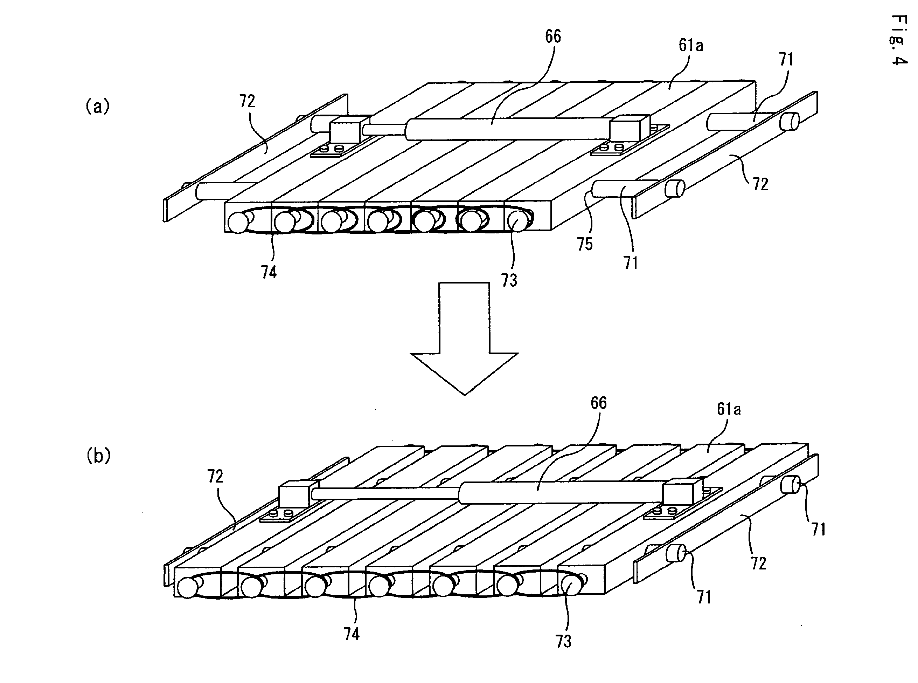

Fig. 3 is a perspective view that shows one example of a robot arm that serves as the molded body mounting mechanism, and Figs. 4 (a) and 4 (b) are a partial enlarged perspective view of the robot arm shown in Fig. 3.

As shown in Fig. 3, the robot arm 113 is provided with a suction mechanism 60, and this suction mechanism 60 has a structure in which seven suction members 61a and suction plates 61b are respectively placed side by side in the horizontal direction so as to be aligned face to face with each other. Each of the suction plates 61b on the lower side has a suction hole (not shown) formed so as to exert a suction force onto the ceramic molded body 11. On the other hand, tube connecting holes are formed at two positions of the upper portion of each of the suction members 61a on the upper side, and tubes 62 are connected thereto through these tube connecting holes. These tubes 62 are gathered to a tube distribution member 64 having a rectangular pillar shape with a cavity formed therein. Moreover, an air suction duct 63 is connected to the tube distribution member 64, and this air suction duct 63 is connected to a suction device (not shown).

Therefore, with respect to the flow of the suction force (air suction force) in the suction mechanism 60, a suction force, generated in the suction device, is transmitted to the tube distribution member 64 through the air suction duct 63, and further transmitted to the respective suction members 61a through the tubes 62 gathered to the tube distribution member 64. In this manner, the suction force, generated by the suction device, is not directly transmitted to the respective suction members 61a, but once transmitted to the tube distribution member 64, and then transmitted thereto so that the same suction force is equally transmitted to all the suction members 61a.

Moreover, a spring and a tube are sandwiched between the suction member 61a and the suction plate 61b so that the suction member 61a and the suction plate 61b are coupled to each other. In this manner, the suction force from the tube 62 is transmitted to the suction member 61a, and then directed to the suction holes formed in the suction plate 61b through the tube sandwiched between the suction member 61a and the suction plate 61b. The suction mechanism 60 suction-holds the ceramic molded body 11 by utilizing the suction force transmitted to the suction holes.
Here, in the present specification, the suction force refers to a pressure difference between the inside of the suction system in the suction mechanism and the outside.

Furthermore, a supporting plate 65 that supports the suction mechanism 60 is coupled to the side face of the tube distribution member 64, and an elevating mechanism 67, such as a cylinder, is vertically attached to the supporting plate 65 so that by driving this elevating mechanism 67, the suction mechanism 60 can be raised and lowered.

Here, a member, which supports the robot arm 113 and is placed in the horizontal direction from the upper portion of the elevating mechanism 67, is engaged with a ball screw, not shown, so that by rotating the ball screw, and the like, the robot arm 113 is shifted in the horizontal direction. Moreover, a pivot mechanism 68 is coupled to the further upper portion of the member supporting the robot arm 113 so that the suction mechanism 60 is allowed to rotate.

Next, referring to Figs. 4(a) and 4(b), the following description will discuss a mechanism used for adjusting the intervals of the suction members 61a.
As shown in Figs. 4(a) and 4(b), through holes 75 that penetrate the suction member 61a in the horizontal direction are formed at two positions of each of the seven suction members 61a. Moreover, two supporting shafts 71 are inserted through all the through holes 75 at the respective two positions in a manner so as to penetrate the seven suction members 61a. Furthermore, the two ends of each of the two supporting shafts 71 are secured by two plate-like supporting shaft connecting plates 72 so that the seven suction members 61a form one unit and are allowed to serve as one large plate with its width being variably changed within a fixed range.

Moreover, nail-shaped hooking portions 73 are formed on the two ends of each suction member 61a, and with adjacent two of the hooking portions 73 being formed into one set, a combining ring 74 is passed over them for each set. By the combining ring 74 that has been passed over each of the sets, all the adjacent suction members 61a are determined in their movable range.

The two end portions of a driving means 66 to be used for adjusting the intervals are secured to the upper faces of the suction members 61a located on the two ends of the seven suction members 61a placed side by side so that the intervals of the suction members 61a can be adjusted by this driving means 66.

In other words, when the length of the driving means 66 is most shortened, the suction members 61a are mutually made in contact with one another completely; in contrast, when the length of the driving means 66 is most lengthened, the interval between the mutual suction members 61a is made longest within the expandable range of the combining ring 74. Thus, the mutual interval between the suction members 61a is determined in two states, that is, the longest length and the shortest length adjusted by the driving means 66. In this case, by adjusting the expandable range of the combining ring 74, the interval between the mutual suction members 61a can be adjusted.

In the case where the combining ring 74 is formed by an elastic member such as rubber, the suction members 61a can be expanded with equal intervals within a range in which the combining ring 74 can be extended, regardless of the length of the driving means 66.

In other words, in the case where the combining ring 74 is made from an elastic member also, the intervals between the mutual suction members 61a are extended and contracted by the extending and contracting operations of the driving means 66. At this time, since the combining ring 74 is hooked on the hooking portions 73 of the adjacent suction members 61a, and since the adjacent suction members 61a are urged by the same force in the mutually approaching directions by the elastic force of the combining ring 74, the suction members 61a are expanded in a manner so as to have mutually equal intervals. Therefore, within the expandable range of the combining ring 74, the suction members 61a can be mutually extended with equal intervals in a desired state between the shortest length and the longest length of the driving means 66.

With respect to the material for the combining ring, examples thereof include: metals such as aluminum, stainless steel, copper, iron and nickel; rubbers such as silicone rubber, natural rubber, synthetic rubber and fluororubber; and resins such as PS resin, ABS resin, POM resin, PC resin, PP resin, PE resin, PPE resin and PBT resin.
Moreover, the material used for adjusting the intervals of the suctionmembers, not limited to the combining ring, another material such as a spring may be used, and any desired member may be used as long as it can adjust the intervals of the suction members.

Here, the interval between the ceramic molded bodies is not particularly determined since it depends on the size, degreasing temperature, degreasing time and the like of the ceramic molded body. When the interval is too wide, the degreasing process advances to excess, and, in contrast, when the interval is too short, the degreasing process becomes insufficient. When the degreasing process advances to excess or when the degreasing process becomes insufficient, deviations tend to occur in the strength of the degreased body.

The following description will discuss a sequence of processes in which ceramic molded bodies 11 are placed on the bottom plate 101 by using the robot arm 113.
First, the ceramic molded bodies 11, transported by the molded body carry-in conveyor 119, are collected in a molded body receiving unit 118. As shown in Fig. 1, in the molded body receiving unit 118, the ceramic molded bodies 11 are arranged so as to be made in contact with each other.

Next, the suction mechanism 60 is lowered so that the side faces (upper faces in the figure) of the ceramic molded bodies 11 are made in contact with the suction plates 61b. Here, since a spring is interposed between each suction member 61a and each suction plate 61b, an impact, exerted upon contacting, can be alleviated. In this case, the driving means 66, which adjusts the intervals of the suction members 61a, is set in the shortest state so as to allow one suction plate 61b to contact to the side face of one ceramic molded body 11. Then, by activating the suction device, not shown, to carry out an air suction process, the ceramic molded body 11 is sucked through the suction holes formed in the suction plate 61b to be suction-held to the suction plate 61b.

Thereafter, the suction mechanism 60 is raised to a predetermined position by the elevating mechanism 67, and the robot arm 113 is shifted horizontally above the bottom plate 101 of the degreasing jig by an arm shifting mechanism.

Next, the driving means 66 is driven so that the intervals between the seven suction members 61a are adjusted to predetermined intervals that are suitable for the degreasing process for the ceramic molded bodies 11. Thus, the intervals between the ceramic molded bodies 11 are set to equal intervals. The predetermined intervals suitable for the degreasing process are properly changed depending on the kind and number of the ceramic molded bodies 11.

Thereafter, the elevating mechanism 67 is activated to lower the suction mechanism 60 so as to place the ceramic molded bodies 11 on the bottom plate 101 placed on the rotation table 112. At the time when the ceramic molded bodies 11 are made in contact with the carbon fiber mats 103, the lowering process of the suction mechanism 60 is stopped, and the suction process by the suction device is then stopped so that they are placed on the bottom plate 101 simultaneously.
Through the above-mentioned procedures, the plurality of ceramic molded bodies 11 are placed with intervals suitable for the degreasing process.
Here, the suction force used for suction-holding the ceramic molded body may be appropriately changed depending on the weight and shape of the ceramic molded bodies to be suction-held, and, for example, when the suction face of the ceramic molded body is a flat face and its weight is 210 g, the suction force is set in a range from 0.7 to 2.0 kPa.

The robot arm 113 may have a cushioning member attached to the contact portion to the ceramic molded body.
The cushioning member is not particularly limited, as long as it is made from a material having a cushioning function, and examples of the material include urethane resin, polyethylene, polypropylene, polystyrene, rubber, epoxy resin and the like. Moreover, the cushioning member, made from each of these materials, may be prepared as a solid body or a foamed body.
The entire cushioning member may be composed of the above-mentioned material, or the cushioning member may have a structure in which a sheet-shaped member, made from the above-mentioned material, is affixed onto a base member made from metal, resin or a ceramic material.

Here, not limited to the structure having a rotation table as shown in Fig. 1, the degreasing jig assembling apparatus of the present invention may have a structure provided with a conveyor, for example, as shown in Figs. 5 and 6.

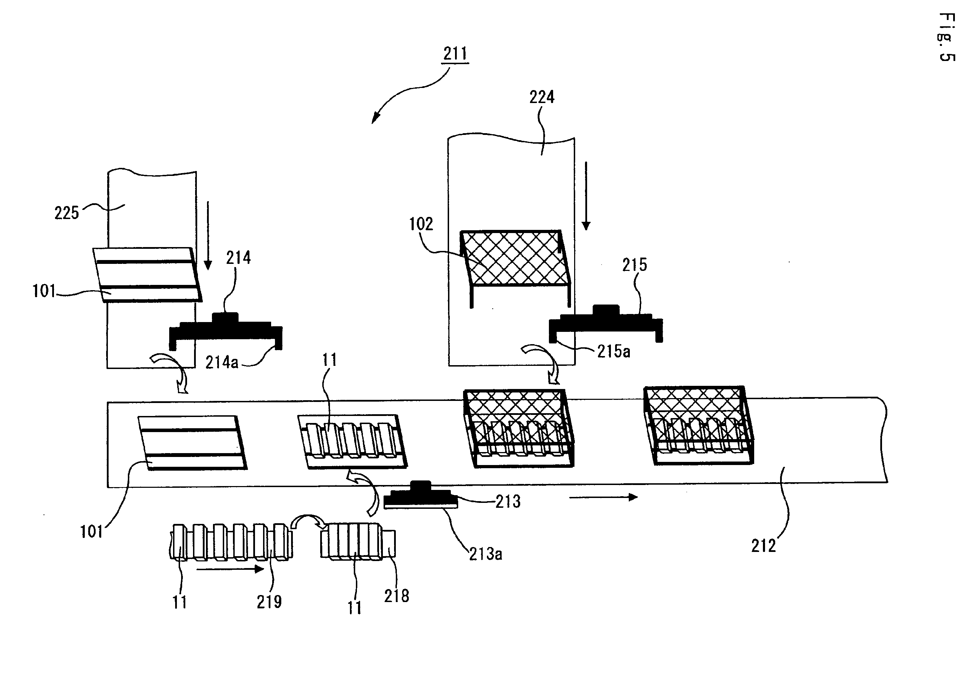

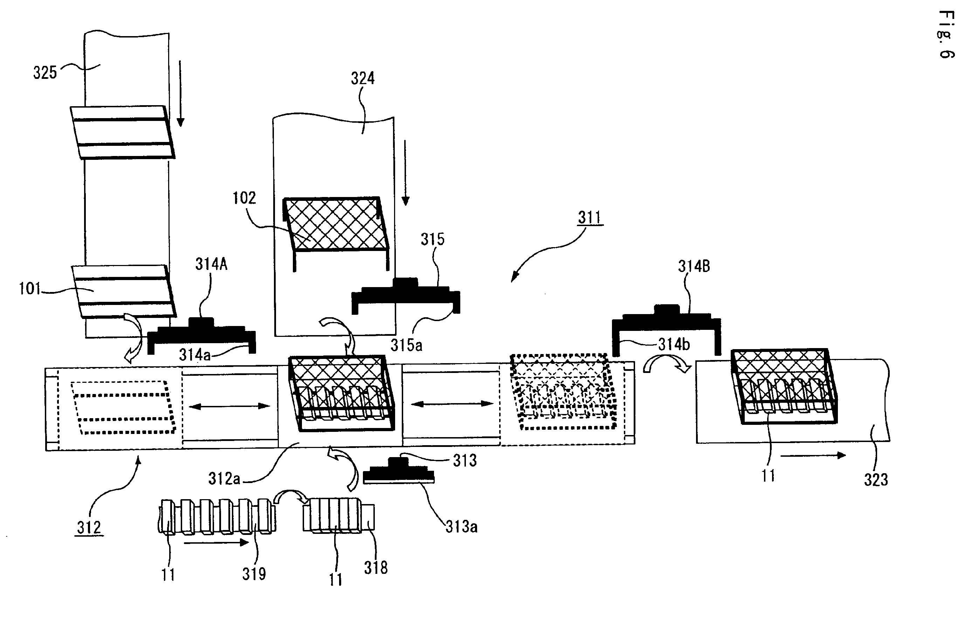

Figs. 5 and 6 are conceptual views that schematically show the outlines of other examples of the degreasing jig assembling apparatus of the present invention respectively.

A degreasing jig assembling apparatus 211 shown in Fig. 5 is provided with three robot arms 213 to 215 and a jig assembling belt conveyor 212 that functions as a conveyor carrying thereon the degreasing jig 100 on which ceramic molded bodies 11 are mounted.
This degreasing jig assembling apparatus 211 also automatically carries out the processes in which: the ceramic molded bodies 11 are placed on the bottom plate 101 and the cover member 102 is attached to the bottom plate 101 in a manner so as to cover the ceramic molded bodies 11. Here, the structure of the degreasing jig is the same as described earlier.
Moreover, in the degreasing jig assembling apparatus 211, the robot arm 213 has the same structure as the robot arm 113 shown in Fig. 1, the robot arm 214 has the same structure as the robot arm 114 shown in Fig. 1, and the robot arm 215 has the same structure as the robot arm 115 shown in Fig. 1.

In the degreasing jig assembling apparatus 211, first, the bottom plate 101, transported from outside by a conveyor 225, is placed by the robot arm 214 on the jig assembling belt conveyer 212 that is intermittently moved.
At this time, the jig assembling belt conveyor 212 is stopped.

Next, when, after having been moved by a predetermined distance, the jig assembling belt conveyor 212 is again stopped, a predetermined number of ceramic molded bodies 11 that have been transported from the outside by a molded body carry-in conveyor 219 and then placed on the molded body receiving unit 218, with the side faces thereof being made in contact with one another, are shifted by the robot arm 213 having a suction unit 213a, and placed on the bottom plate 101 with intervals between them.
Therefore, in the degreasing jig assembling apparatus 211, the robot arm 213 functions as a molded body mounting mechanism.

Next, when, after having been moved by a predetermined distance, the jig assembling belt conveyor 212 is stopped, the cover member 102, transported from the outside by a conveyor 224, is grasped by the robot arm 215, and attached to the bottom plate 101 on which the ceramic molded bodies 11 have been placed, in a manner so as to cover the ceramic molded bodies 11.
Therefore, in the degreasing jig assembling apparatus 211, the robot arm 215 functions as a cover member attaching mechanism.
Thereafter, the degreasing jig 100 on which the ceramic molded bodies 11 have been placed, with the cover member 102 being attached thereto, is carried out to an apparatus used in the next process (for example, the degreasing process) by the jig assembling belt conveyor 212.
Here, after the assembling operations on the jig assembling belt conveyor 212 have been completed, the degreasing jig 100 may be switched to and placed on another conveyor, and transported to an apparatus used in the next process.

Moreover, in the degreasing jig assembling apparatus 211, the jig assembling belt conveyor 212 is a conveyor that moves intermittently, and upon stopping of the jig assembling belt conveyor 212, it is desirable to shift from a moving state with a moving speed of 1.5 m/min or less to the stopped state.
In the case where the moving speed immediately before the shift to the stopped state is more than 1.5 m/min, upon stopping, the ceramic molded body 11 might be moved on the bottom plate 101 due to force of inertia.
If the ceramic molded body 11 is moved on the bottom plate 101, the ceramic molded bodies 11 might be made in contact with each other when moved, or the ceramic molded body 11 might be made in contact with the cover member 102 to cause damages to the ceramic molded body.
Moreover, upon shifting from the moving state of a moving speed of 1. 5/min or less to the stopped state, the conveyor shifts from the moving state may be shifted to the stopped state instantaneously, or the moving speed may be gradually reduced from the moving state to the stopped state.
Therefore, when the ceramic molded bodies placed on the bottom plate 101 are transported at a speed of more than 1.5 m/min, the moving speed is desirably reduced to a speed of 1.5 m/min or less prior to the stoppage, and then directed to the stopped state.

In the degreasing jig assembling apparatus 211 in the embodiment shown in Fig. 5, the conveyor forming the degreasing jig assembling apparatus for placing the degreasing jig 100 thereon may be a chain conveyor, a roller conveyor or a pallet conveyor aside from the belt conveyor.

Moreover, in the degreasing jig assembling apparatus shown in Fig. 5, the number of robot arms is not particularly limited to three, and may be less than three or more than three, and in a case where the number of robot arms is less than three, one robot arm is allowed to have a plurality of functions.
More specifically, for example, the robot arm used for moving the bottom plate and the robot arm used for attaching the cover member may comprise a single robot arm.

The degreasing jig assembling apparatus of the present invention may have a structure as shown in Fig. 6.
A degreasing jig assembling apparatus 311, shown in Fig. 6, is provided with a robot arm 313, two robot arms 314 (314A, 314B), a robot arm 315 and a jig assembling pallet conveyor 312 that functions as a conveyor used for carrying the degreasing jig 100 on which ceramic molded bodies 11 are mounted.
This degreasing jig assembling apparatus 311 also automatically carries out the processes in which: the ceramic molded bodies 11 are placed on the bottom plate 101 and the cover member 102 is attached to the bottom plate 101 in a manner so as to cover the ceramic molded bodies. Here, the structure of the degreasing jig is the same as described earlier.
Moreover, in the degreasing jig assembling apparatus 311, the robot arm 313 has the same structure as the robot arm 113 shown in Fig. 1, the robot arm 314 has the same structure as the robot arm 114 shown in Fig. 1, and the robot arm 315 has the same structure as the robot arm 115 shown in Fig. 1.

In the degreasing jig assembling apparatus 311, first, the bottom plate 101, transported from outside by a conveyor 325, is placed on a pallet 312a of a jig assembling pallet conveyer 312 by the robot arm 314A.
Next, when, after the pallet 312a has been moved by a predetermined distance toward the conveyor 323 side with the bottom plate 101 being placed thereon, the jig assembling pallet belt conveyor 312 is stopped, a predetermined number of ceramic molded bodies 11 that have been transported from outside by a molded body carry-in conveyor 319 and then placed on the molded body receiving unit 318 with the side faces thereof being made in contact with one another are shifted by the robot arm 313 having a suction unit 313a, and placed on the bottom plate 101 with intervals between them.
Therefore, in the degreasing jig assembling apparatus 311, the robot arm 313 functions as a molded body mounting mechanism.

Next, the cover member 102, transported from outside by a conveyor 324, is grasped by the robot arm 315, and attached to the bottom plate 101 on which the ceramic molded bodies 11 have been mounted, in a manner so as to cover the ceramic molded bodies 11.
Therefore, in the degreasing jig assembling apparatus 311, the robot arm 315 functions as a cover member attachingmechanism.

Next, after the pallet 312a have been moved by a predetermined distance toward the conveyor 323 side, the jig assembling belt conveyor 312 is again stopped, and the degreasing jig 100 on which the ceramic molded bodies 11 have been mounted, with the cover member 102 being attached thereto, is grasped by the robot arm 314B, and placed on the conveyor 323.
Thereafter, the degreasing jig 100 is carried out to an apparatus used in the next process (for example, degreasing process) by the conveyor 323.
The pallet 312a, on the other hand, is moved toward the conveyor 325 side so as to carry the next bottom plate 101, and stopped at a predetermined position.
In the case of the jig assembling pallet conveyor 312 comprising the degreasing jig assembling apparatus 311 also, upon stoppage, it i.s desirable to shift from a moving state with a moving speed of 1.5 m/min or less to the stopped state.

In the degreasing jig assembling apparatus 311 in the embodiment as shown in Fig. 6, the conveyor used for carrying the degreasing jig 100, which forms the degreasing jig assembling apparatus, may be a belt conveyor, a chain conveyor, a roller conveyor or the like aside from the pallet conveyor.

As described above, the degreasing jig assembling apparatus of the present invention may have structures as shown in Figs. 5 and 6.
In the degreasing jig assembling apparatus as shown in Figs. 5 and 6, specific examples of the molded body carry-in conveyors 219, 319 and conveyors 224, 225, 323 to 325 include a belt conveyor, a chain conveyor, a roller conveyor, a pallet conveyor and the like, in the same manner as the degreasing jig assembling apparatus 111 shown in Fig. 1.

Moreover, although not particularly shown in the drawings, the degreasing jig assembling apparatus of the present invention may have a table in place of the jig assembling pallet conveyor, for example, in the degreasing jig assembling apparatus having the structure as shown in Fig. 6.
In this structure, the table is always stopped, and after ceramic molded bodies have been mounted on the degreasing jig, by moving the bottom plate, the ceramic molded body and the cover member onto the table in this order by the robot arms, this may be placed on the conveyor to be carried out to an apparatus used in the next process, or the table is configured to be movable through rails and the like, and the table may be moved along the rails and the like in the same manner as the pallet of the pallet conveyor (that is, moved to the end portion next to each conveyor).
Moreover, in the degreasing jig assembling apparatus having the structure shown in Fig. 6, the number of robot arms is not particularly limited to four, and may be less than four or more than four, and in a case where the number of robot arms is less than four, one robot arm is allowed to have a plurality of functions.

The degreasing jig assembling apparatus of the present invention having the above-mentioned structure automatically carries out a holding process of ceramic molded bodies on the degreasing jig so that the ceramic molded bodies can be held on the degreasing jig efficiently without the need for manual labor.

The following description will discuss a degreasing jig disassembling apparatus in accordance with the present invention.
A degreasing jig disassembling apparatus in accordance with the present invention is a degreasing jig disassembling apparatus comprising: a robot arm; and a table or a conveyor on which a degreasing jig comprising a bottom plate and a cover member is placed, a ceramic molded body being mounted on the degreasing jig upon degreasing the ceramic molded body, the degreasing jig on which the ceramic molded body is mounted being disassembled on the table or the conveyor, wherein the degreasing jig disassembling apparatus further comprising a cover member detaching mechanism that detaches the cover member attached in a manner so as to cover the ceramic molded body mounted on the bottom plate placed on the table or the conveyor, by using the robot arm.

Referring to the drawings, the following description will discuss a degreasing jig disassembling apparatus in accordance with the present invention.

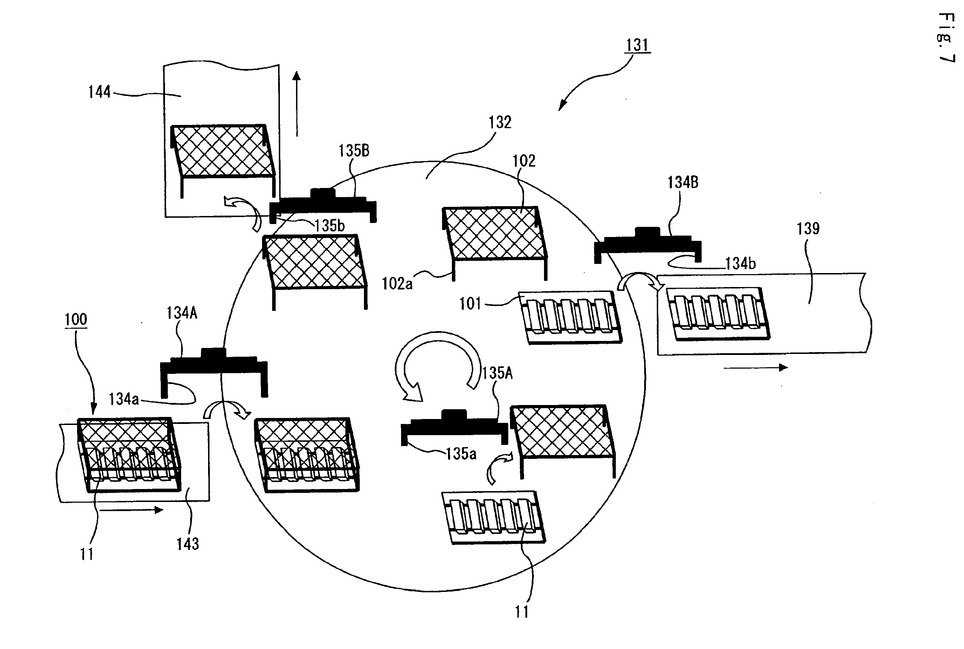

Fig. 7 is a conceptual view that schematically shows the outline of the degreasing jig disassembling apparatus of the present invention.
As shown in Fig. 7, the component members of a degreasing jig disassembling apparatus of the present invention are the almost same of those of the above-mentioned degreasing jig assembling apparatus of the present invention.
In other words, as shown in Fig. 7, a degreasing jig disassembling apparatus 131 is provided with two robot arms 134 (134A and 134B), two robot arms 135 (135A and 135B), and also has a rotation table 132 serving as a table for placing thereon a degreasing jig 100 on which a ceramic molded body 11 is mounted is placed.

This degreasing jig disassembling apparatus 131 automatically carries out processes for detaching the cover member 102 from the degreasing jig 100, comprised of a cover member 102 and a bottom plate 101, in which the cover member 102 is attached onto the bottom plate 101 on which the degreased ceramic molded body 11 is mounted in a manner so as to cover the ceramic molded body 11. Here, the degreasing jig 100 has been explained in the description of the degreasing jig assembling apparatus.

In the degreasing jig disassembling apparatus 131, the degreasing jig 100 that has been transported by a conveyor 143, with the degreased ceramic molded body 11 being mounted thereon, is first placed on the rotation table 132 by the robot arm 134A. Here, the robot arm 134A has the same structure as the robot arm 114 that has been explained.

Next, when the rotation table is shifted by about 1/4 rotation, the cover member 102 is detached from the bottom plate 101 by the robot arm 135A. The robot arm 135A has the same structure as the robot arm 115 that has already been discussed, and with the frame member 102b of the cover member 102 being grasped by the grasping unit 135a of the robot arm 135A, the grasping unit 135a is moved upward so that the supporting member 102a is drawn from a through hole 101a formed in the bottom plate 101; thus, the cover member 102 can be detached.
Therefore, in the degreasing jig disassembling apparatus 131, the robot arm 135A functions as a cover member detaching mechanism.
Here, the rotation table 132 repeatedly rotates and stops intermittently.

When the rotation table 132 successively rotates, the bottom plate 101 on which the degreased ceramic molded body 11 is placed is grasped by the robot arm 134B having a grasping mechanism at this time, and delivered to the bottom plate transporting conveyor 139, and the bottom plate 101, as it is, is transported to an apparatus used in the next process. Here, the robot arm 134B has the same structure as the robot arm 114 that has been explained.

Here, after the rotation table 132 has further rotated, the detached cover member 102 is placed on a conveyor 144 by the robot arm 135B, and carried out. Here, the robot arm 135B has the same structure as the robot arm 115 that has already been explained.

With respect to specific examples of the bottom plate transporting conveyor 139 and conveyors 143, 144 to be installed in the degreasing jig disassembling apparatus, conveyors, such as a belt conveyor, a chain conveyor, a roller conveyor and a pallet conveyor, are listed.

Moreover, in the degreasing jig disassembling apparatus shown in Fig. 7, the number of robot arms is not particularly limited to four, and may be less than four or more than four, and in a case where the number of robot arms is less than four, one robot arm is allowed to have a plurality of functions.

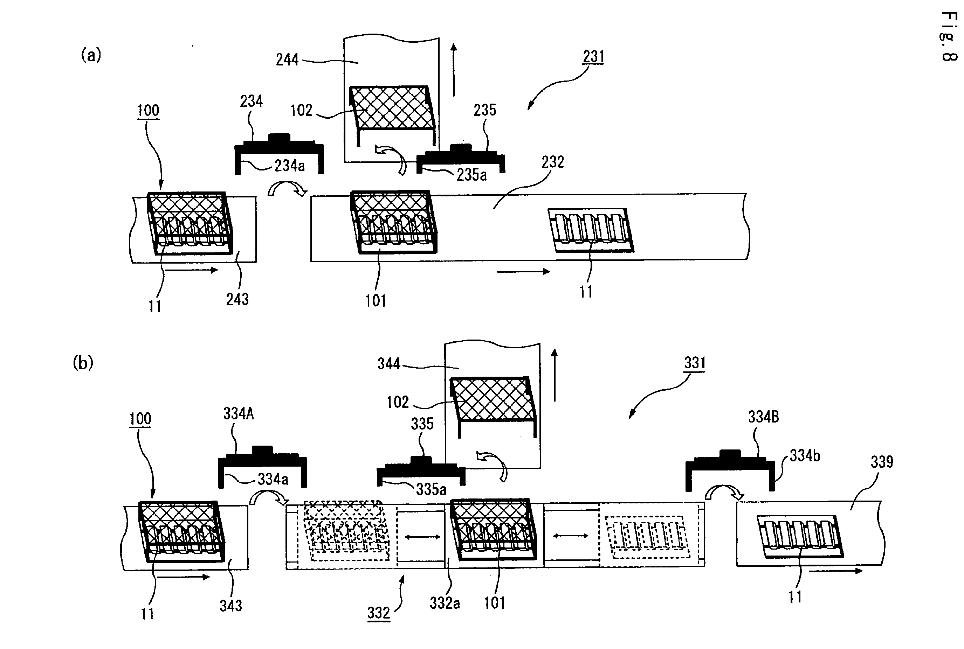

Moreover, the structure of the degreasing jig disassembling apparatus of the present invention is not limited to the structure with a rotation table as shown in Fig. 7, and, for example, structures having conveyors as shown in Figs. 8 (a) and 8(b) may be used.
Figs. 8 (a) and 8 (b) are conceptual views that respectively show other examples of the degreasing jig disassembling apparatus of the present invention.

A degreasing jig disassembling apparatus 231, shown in Fig. 8 (a), is provided with two robot arms 234, 235, and a jig disassembling belt conveyor 232 that functions as a conveyor that carries the degreasing jig 100 with the ceramic molded body 11 being mounted thereon.

This degreasing jig disassembling apparatus 231 also automatically carries out processes for detaching the cover member 102 from the degreasing jig 100, comprised of a cover member 102 and a bottom plate 101, in which the cover member 102 is attached onto the bottom plate 101 on which the degreased ceramic molded body 11 is placed in a manner so as to cover the ceramic molded body 11 . Here, the degreasing jig 100 has already been explained.
Moreover, in the degreasing jig disassembling apparatus 231, the robot arm 234 has the same structure as the robot arm 134 shown in Fig. 7, and the robot arm 235 has the same structure as the robot arm 135 shown in Fig. 7.

In the degreasing jig disassembling apparatus 231, the degreasing jig 100 that has been transported by a conveyor with the degreased ceramic molded body 11 being mounted thereon, is first placed on a jig disassembling belt conveyor 232 by the robot arm 234.

Next, the cover member 102 is detached from the bottom plate 101 by the robot arm 235, and the cover member 102 thus detached is transported outside by a conveyor 244.
Therefore, in the degreasing jig disassembling apparatus 231, the robot arm 235 functions as a cover member detaching mechanism.
Here, during this operation, the conveyor 244 is stopped.

When the jig disassembling belt conveyor 232 is shifted, the bottom plate 101 from which the cover member 102 is detached, with the ceramic molded body 11 being mounted thereon, as it is, is transported to an apparatus used in the next process such as firing process.
After the disassembling operations have been completed on the jig disassembling belt conveyor 232, the bottom plate 101 on which the ceramic molded body 11 is mounted may be switched to and carried on another conveyor, and transported to an apparatus used in the next process.

In the degreasing jig disassembling apparatus 231, the jig disassembling belt conveyor 232 is a conveyor that is moved intermittently, and upon stopping of the jig disassembling belt conveyor 232, it is desirable to shift from a moving state with a moving speed of 1.5 m/min or less to the stopped state.
In the case where the moving speed immediately before the shift to the stopped state is more than 1.5 m/min, upon stopping, the ceramic molded body 11 might be moved on the bottom plate 101 due to force of inertia.
If the degreased ceramic molded body 11 is moved on the bottom plate 101, the degreased ceramic molded bodies 11 might be made in contact with each other when moved, or the degreased ceramic molded body 11 might be made in contact with the cover member 102 to cause damages to the degreased ceramic molded body.
Moreover, upon shifting from the moving state of a moving speed of 1.5/min or less to the stopped state, the jig disassembling belt conveyor 232 may shift from the moving state to the stopped state instantaneously, or the jig disassembling belt conveyor 232 may shift from the moving state through gradually reducing of the moving speed to the stopped state.
Therefore, when the ceramic molded bodies 11 placed on the bottom plate 101 are transported at a speed of more than 1.5 m/min, the moving speed is desirably reduced to a speed of 1. 5 m/min or less once, prior to the stoppage, and then directed to the stopped state.

In the degreasing jig disassembling apparatus 231 in the embodiment shown in Fig. 8(a), the conveyor comprising the degreasing jig assembling apparatus for placing degreasing jig 100 thereon may be a chain conveyor, a roller conveyor, a pallet conveyor or the like aside from the belt conveyor.

Moreover, in the degreasing jig disassembling apparatus shown in Fig. 8 (a), the number of robot arms is not particularly limited to two, and one robot arm may be allowed to have two functions.

The degreasing jig disassembling apparatus of the present invention may have a structure shown in Fig. 8(b).
A degreasing jig disassembling apparatus 331, shown in Fig. 8(b), is provided with two robot arms 334 (334A, 334B), a robot arm 335 and a jig disassembling pallet conveyor 332 that functions as a conveyor used for carrying the degreasing jig 100 on which degreased ceramic molded bodies 11 are mounted.

This degreasing jig disassembling apparatus 331 also automatically carries out the processes for detaching the cover member 102 from the degreasing jig 100, comprised of a cover member 102 and a bottom plate 101, in which the cover member 102 is attached onto the bottom plate 101 on which the degreased ceramic molded body 11 is placed in a manner so as to cover the ceramic molded body 11. Here, the degreasing jig 100 has already been explained.
Moreover, in the degreasing jig disassembling apparatus 331, the robot arm 334 has the same structure as the robot arm 134 shown in Fig. 7, and the robot arm 335 has the same structure as the robot arm 135 shown in Fig. 7.

In the degreasing jig disassembling apparatus 331, first, the degreasing jig 100, which has been transported by a conveyor 343, with degreased ceramic molded bodies 11 being mounted thereon, is placed on a pallet 332a of a jig disassembling pallet conveyer 332 by the robot arm 334A.

Next, after the pallet 332a has been moved by a predetermined distance toward the bottom plate transporting conveyor 339 side with the degreasing jig 100 being placed thereon, the jig disassembling pallet belt conveyor 332 is stopped, and the cover member 102 is detached from the bottom plate 101 of the degreasing jig 100 placed on the pallet 332a by the robot arm 235, and the detached cover member 102 is transported outside by a conveyor 344.
Therefore, in the degreasing jig disassembling apparatus 331, the robot arm 335 functions as a cover member detaching mechanism.

Next, after the pallet 332a have been moved by a predetermined distance toward the bottom plate transporting conveyor 339 side, the jig disassembling belt conveyor 332 is again stopped, and the bottom plate 101 from which the cover member 102 has been detached is placed on the bottom plate transporting conveyor 339, with the degreased ceramic molded bodies 11 being mounted thereon, by the robot arm 334B, and the bottom plate, as it is, is transported to an apparatus used in the next process such as a firing process by the bottom plate transporting conveyor 339.
Thereafter, the pallet 332a is moved toward the conveyor 343 side and stopped at a predetermined position so that the next degreasing jig 100 is placed thereon.
In the case of the jig disassembling pallet conveyor 332 comprising the degreasing jig disassembling apparatus 331 also, upon stoppage, it is desirable to shift from a moving state with a moving speed of 1.5 m/min or less to the stopped state.

In the degreasing jig disassembling apparatus 331 in the embodiment as shown in Fig. 8 (b), the conveyor used for carrying the degreasing jig 100, which comprises the degreasing jig disassembling apparatus, may be a belt conveyor, a chain conveyor, a roller conveyor or the like aside from the pallet conveyor.

Moreover, in the degreasing jig disassembling apparatus having the structure shown in Fig. 8(b), the number of robot arms is not particularly limited to three, and may be less than three or more than three, and in a case where the number of robot arms is less than three, one robot arm is allowed to have a plurality of functions.

As described above, the degreasing jig disassembling apparatus of the present invention may have the structures shown in Figs. 8(a) and 8(b).
Here, in the degreasing jig disassembling apparatus as shown in Figs. 8(a) and 8(b), specific examples of the bottom plate transporting conveyor 339 and conveyors 243, 244, 343 to 344 include a belt conveyor, a chain conveyor, a roller conveyor, a pallet conveyor and the like, in the same manner as the degreasing jig disassembling apparatus 131 shown in Fig. 7.

Moreover, although not particularly shown in the drawings, the degreasing jig disassembling apparatus of the present invention may have a table in place of the jig disassembling pallet conveyor, for example, in the degreasing jig disassembling apparatus having the structure as shown in Fig. 8(b).
In this structure, the table is always stopped, and by a robot arm, a placing process of the degreasing jig on which degreased ceramic molded bodies have been mounted onto the table of the degreasing jig, a detaching process of the cover member from the bottom plate and a shifting process of the bottom plate on which the ceramic molded bodies have been mounted to the conveyor may be carried out in this order, or the table is configured to be movable through rails and the like, and the table may be moved along the rails and the like in the same manner as the above-mentioned pallet of the pallet conveyor.

The degreasing jig disassembling apparatus of the present invention having the above-mentioned structure can automatically carry out the disassembling processes of the degreasing jig efficiently without the need for manual labor.

The following description will discuss a degreasing jig circulating apparatus in accordance with the present invention.
The degreasing jig circulating apparatus of the present invention is a degreasing jig circulating apparatus comprising: a degreasing jig assembling apparatus comprising a robot arm, and a table or a conveyor on which a degreasing jig comprising a bottom plate and a cover member is placed, a ceramic molded body being mounted on the degreasing jig upon degreasing the ceramic molded body, the ceramic molded body being mounted on the degreasing jig on the table or the conveyor; a degreasing furnace that degreases the ceramic molded body mounted on the degreasing jig; a degreasing jig disassembling apparatus comprising a robot arm, and a table or a conveyor on which the degreasing jig is placed, the degreasing jig on which the ceramic molded body is mounted being disassembled on the table or the conveyor; a cover member transporting conveyor that transports the cover member that has been detached by the degreasing jig disassembling apparatus to the degreasing jig assembling apparatus; and a bottom plate transporting conveyor that transports the bottom plate on which the ceramic molded body is mounted, with the cover member being detached, wherein the degreasing jig assembling apparatus comprising: a molding body mounting mechanism that mounts the ceramic molded body at a predetermined position on the bottom plate placed on the table or the conveyor by using the robot arm; a cover member attaching mechanism that attaches the cover member to the bottom plate in a manner so as to cover the ceramic molded body mounted on the bottom plate; and a jig delivering mechanism that delivers the degreasing jig on which the ceramic molded body is mounted to the degreasing furnace, the degreasing jig disassembling apparatus comprising: a jig receiving mechanism that receives the degreasing jig on which the ceramic molded body is mounted from the degreasing furnace; a cover member detaching mechanism that detaches the cover member attached in a manner so as to cover the ceramic molded body mounted on the bottom plate placed on the table or the conveyor, by using the robot arm; and a bottom plate delivering mechanism that delivers the bottom plate on which the ceramic molded body is mounted, with the cover member being detached, to the bottom plate transporting conveyor.

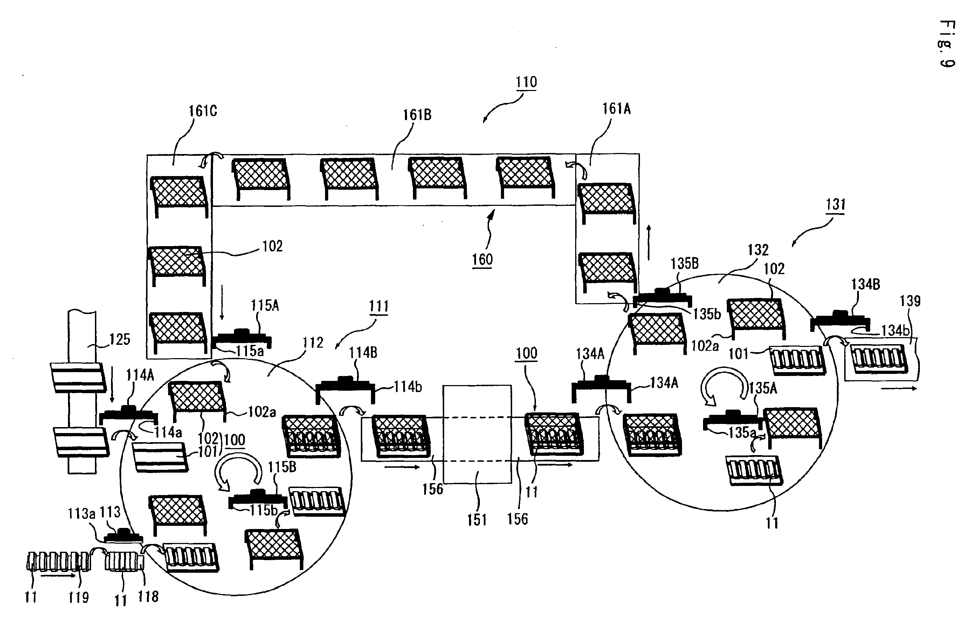

Referring to Fig. 9, the following description will discuss the degreasing jig circulating apparatus of the present invention.
Fig. 9 is a conceptual view that schematically shows the outline of the degreasing jig circulating apparatus of the present invention.
A degreasing jig circulating apparatus 110 is provided with a degreasing jig assembling apparatus 111, a degreasing furnace 151, a degreasing jig disassembling apparatus 131, cover member transporting conveyors 161A to 161C and a bottom plate transporting conveyor 139.
With respect to the degreasing jig assembling apparatus 111 and the degreasing jig disassembling apparatus 131, the degreasing jig assembling apparatus 111 (see Fig. 1) and the degreasing jig disassembling apparatus 131 (see Fig. 7), which have already been explained, can be used respectively, and the detailed description thereof will be omitted.
Here, the degreasing jig circulating apparatus 110 will be described in accordance with a flow of the ceramic molded body 11.

In the degreasing jig circulating apparatus 110 of the present invention, ceramic molded bodies 11, transported by the molding body carry-in conveyor 119, are mounted on the degreasing jig 100 comprised of a cover member 102 transported by a cover member transporting conveyor 161C (conveyor 124 in Fig. 1) and a bottom plate 101 transported by a conveyor 125 in the degreasing jig assembling apparatus 111.

The degreasing jig 100 on which the ceramic molded bodies 11 have been mounted is placed on an inter-furnace transporting conveyor 156 (conveyor 123, in Fig. 1) in the degreasing furnace 151 by the robot arm 114B, and after carrying out a degreasing process at a predetermined temperature (normally, 200 to 500°C) in the degreasing furnace 151, this is further transported to the degreasing jig disassembled device 131 by an inter-furnace transporting conveyor 156 (conveyor 143, in Fig. 7).
In the degreasing jig circulating apparatus 110, the robot arm 114B functions as a jig delivering mechanism.

Next, the ceramic molded bodies 11 that have been degreased are shifted to the degreasing jig disassembling apparatus 131 by the robot arm 134A where the degreasing jig 100 is then disassembled to the bottom plate 101 on which the ceramic molded bodies 11 have been mounted and the cover member 102, and the bottom plate 101 bearing the ceramic molded bodies 11 is transported to the bottom plate transporting conveyor 139 by the robot arm 134B, and carried out to an apparatus used in the next process by the conveyor. Moreover, the cover member 102 is placed on a cover member transporting conveyor 161A (conveyor 144 in Fig. 7) by the robot arm 135B, and returned to the degreasing jig assembling apparatus 111 by the cover member transporting conveyor 161.
In the degreasing jig circulating apparatus 110, the robot arm 134A functions as the jig receiving mechanism, and the robot arm 134B functions as the bottom plate delivering mechanism.

Here, after the next process (for example, firing process), the bottom plate 101 from which the resulting ceramic molded bodies have been taken out may be returned to the degreasing jig assembling apparatus 111 through a conveyor.

Here, with respect to the degreasing furnace 151 comprising the degreasing jig circulating apparatus 110, not particularly limited, conventionally known degreasing furnace may be used. The degreasing furnace may be a continuous furnace or a batch furnace; however, from the viewpoints of improving the working efficiency and easiness in applicability to an automatic system, the continuous furnace is desirably used.
With respect to the conveyors installed in the degreasing furnace, examples thereof include a belt conveyor, a chain conveyor, a roller conveyor and the like.

Here, the cover member transporting conveyor 161 comprising the degreasing jig circulating apparatus 110 is comprised of three conveyors (cover member transporting conveyors 161A to 161C), and by successively passing the cover member 102 from the cover member transporting conveyor 161A to the cover member transporting conveyor 161C, the cover member 102 can be transported from the degreasing jig disassembling apparatus 131 to the degreasing jig assembling apparatus 111.
Here, the delivering processes of the cover member between the respective cover member transporting conveyors can be carried out by using robot arms and the like, not shown.
Here, in the degreasing jig circulating apparatus 110 shown in Fig. 9, the cover member transporting conveyor 161 is comprised of three cover member transporting conveyors; however, the cover member transporting conveyor may be formed by one conveyor.
Moreover, in order to improve the transporting efficiency, a part or all of the cover member transporting conveyor may be formed into multiple stages of two stages or more.

Specific examples of the cover member transporting conveyor include: a belt conveyor, a chain conveyor, a roller conveyor and the like. In the case where the cover member transporting conveyor is comprised of a plurality of cover member transporting conveyors, the kinds of the respective cover member transporting conveyors may be the same or different from each other.

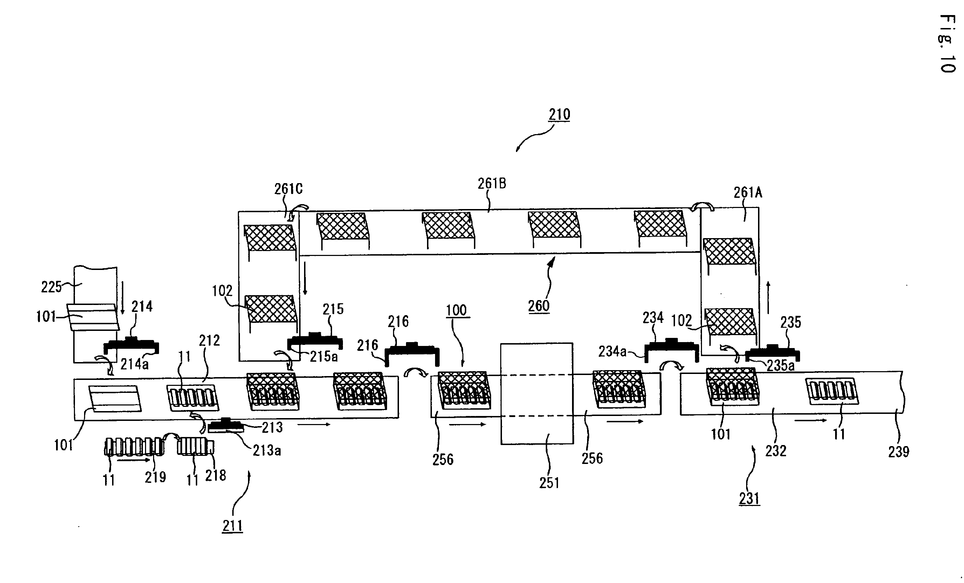

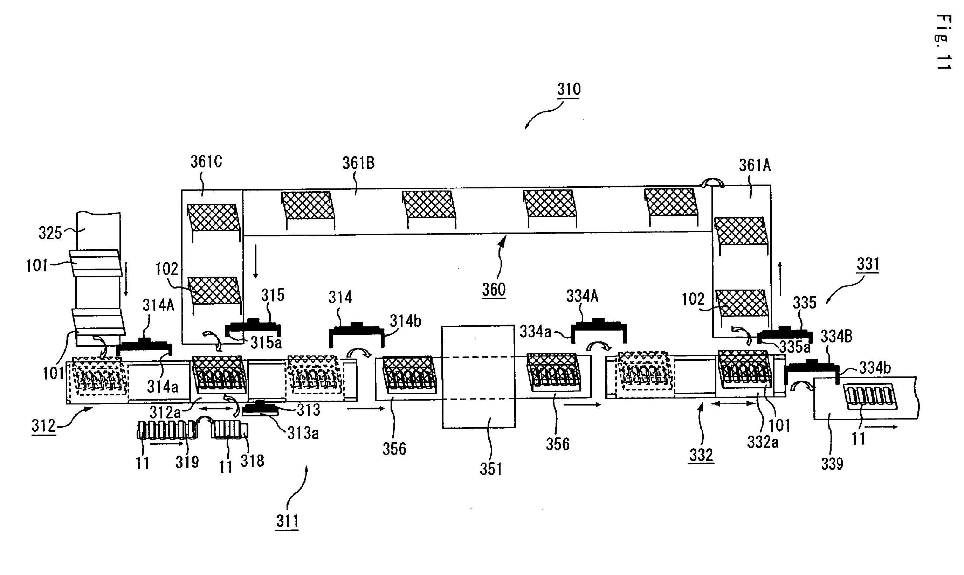

With respect to the structure of the degreasing jig circulating apparatus of the present invention, not limited to the structure as shown in Fig. 9 which has the degreasing jig assembling apparatus provided with a rotation table and the degreasing jig disassembling apparatus provided with a rotation table, for example, structures as shown in Figs. 10 and 11 may be used.
Figs. 10 and 11 are conceptual views that schematically show the outlines of other examples of the degreasing jig circulating apparatus of the present invention respectively.

A degreasing jig circulating apparatus 210 shown in Fig. 10 is provided with a degreasing jig assembling apparatus 211 (see Fig. 5), a degreasing furnace 251, a degreasing jig disassembling apparatus 231 (see Fig. 8(a)), cover member transporting conveyors 261 (261A to 261C) and a bottom plate transporting conveyor 239.
In the degreasing jig circulating apparatus 210, the bottom plate transporting conveyor 239 is combined to a jig disassembling belt conveyor 232 that functions as a conveyor comprising the degreasing jig disassembling apparatus 231 as an integral unit.

In the degreasing jig assembling apparatus 211 of the degreasing jig circulating apparatus 210, ceramic molded bodies 11 are placed on the bottom plate 101 transported by the conveyor 225 on the jig assembling belt conveyor 212 and the cover member 102, transported by the cover member transporting conveyor 261C (conveyor 224 in Fig. 5), is further attached thereto so that the ceramic molded bodies 11 are mounted on the degreasing jig 100.
Moreover, the degreasing jig 100 is transported toward the degreasing furnace 251 by the jig assembling belt conveyor 212 functioning as a conveyor, and further placed on the inter-furnace transporting conveyor 256 by the robot arm 216 having a grasping unit 216a, installed near the end of the jig assembling belt conveyor 212.
Therefore, in the degreasing jig assembling apparatus, the robot arm 216 functions as a jig delivering mechanism.

Here, in the degreasing jig circulating apparatus 210, the jig assembling belt conveyor 212 and the inter-furnace transporting conveyor 256 may be combined into an integral unit and disposed movably and continuously. In this case, the robot arm 216 is unnecessary.
In this case, the jig assembling belt conveyor 212 is allowed to have both of the functions as the conveyor and the jig delivering mechanism.

Thereafter, a degreasing process is carried out on the ceramic molded bodies 11 mounted on the degreasing jig 100 at a predetermined temperature in the degreasing furnace 251, and the degreasing jig 100 is further transported toward the degreasing jig disassembling apparatus 231 by the inter-furnace transporting conveyor 256 (conveyor 243, in Fig. 8 (a)), and then placed on the jig disassembling belt conveyor 232 of the degreasing jig disassembling apparatus 231 by the robot arm 234. Therefore, in the degreasing jig circulating apparatus 210, the robot arm 234 functions as a jig receiving mechanism.

In the degreasing jig disassembling apparatus 231, the cover member 102 is detached by the robot arm 235 on the jig disassembling belt conveyor 232, and the cover member 102 is placed on the cover member transporting conveyor 261A (conveyor 244 in Fig. 8(a)) by the robot arm 235 so that it is returned to the degreasing jig assembling apparatus 211 by the cover member transporting conveyor 261. In contrast, the bottom plate 101 on which the ceramic molded bodies 11 have been placed is carried out to an apparatus used in the next process by the jig disassembling belt conveyor 232. In the degreasing jig circulating apparatus 210, the jig disassembling belt conveyor 232 functions as a bottom plate delivering mechanism.

Here, the bottom plate 101 from which, after the next process (for example, firing process), the resulting ceramic molded bodies have been taken out may be returned to the degreasing jig assembling apparatus 211 through a conveyor.
Moreover, in the degreasing jig circulating apparatus 210, the inter-furnace transporting conveyor 256 and the jig disassembling belt conveyor 232 may be integrally formed and disposed movably and continuously. In this case, the robot arm 234 is unnecessary.

The degreasing furnace 251 and the cover member transporting conveyor 261, which comprises the degreasing jig circulating apparatus 210, have the same structures as the degreasing furnace 151 and the cover member transporting conveyor 161 comprising the degreasing jig circulating apparatus 110.

The degreasing jig circulating apparatus of the present invention may have a structure as shown in Fig. 11.
A degreasing jig circulating apparatus 310 shown in Fig. 11 is provided with a degreasing jig assembling apparatus 311 (see Fig. 6), a degreasing furnace 351, a degreasing jig disassembling apparatus 331 (see Fig. 8(b)), cover member transporting conveyors 361 (361A to 361C) and a bottom plate transporting conveyor 339.

In the degreasing jig circulating apparatus 310, ceramic molded bodies 11 are mounted on the bottom plate 101 transported by a conveyor 325 on a jig assembling pallet conveyor 312 and the cover member 102, transported by a cover member transporting conveyor 361C (conveyor 324 in Fig. 6), is further attached thereto so that the ceramic molded bodies 11 are mounted on the degreasing jig 100, in the degreasing jig assembling apparatus 311.
Moreover, the degreasing jig 100 on which the ceramic molded bodies 11 have been mounted is further transported, and then placed on the inter-furnace transporting conveyor 356 by the robot arm 314B.
Therefore, in the degreasing jig assembling apparatus 311, the robot arm 314B functions as a jig delivering mechanism.

Thereafter, a degreasing process is carried out on the ceramic molded bodies 11 mounted on the degreasing jig 100 at a predetermined temperature in the degreasing furnace 351, the degreasing jig 100 is transported toward the degreasing jig disassembling apparatus 331 by an inter-furnace transporting conveyor 356 (conveyor 343 in Fig. 8(b)), and then placed on a jig disassembling pallet conveyor 332 of the degreasing jig disassembling apparatus 331 by the robot arm 334A. Therefore, in the degreasing jig circulating apparatus 310, the robot arm 334A functions as a jig receiving mechanism.

In the degreasing jig disassembling apparatus 331, after the degreasing jig 100 has been switched to and placed on the jig disassembling pallet conveyor 332 from the inter-furnace transporting conveyor 356 by the robot arm 334A, the pallet 332a is moved toward the vicinity of the robot arm 335, and the cover member 102 is then detached by the robot arm 335 so that the cover member 102 is placed on a cover member transporting conveyor 361A (conveyor 344 in Fig. 8 (b)) by the robot arm 335, and then returned to the degreasing jig assembling apparatus 311 by the cover member transporting conveyor 361.
In contrast, the bottom plate 101 on which the ceramic molded bodies 11 have been mounted is placed on the bottom plate transporting conveyor 339 by the robot arm 334B so that the bottom plate 101, as it is, is transported to an apparatus used in the next process by the bottom transporting conveyor 339. Therefore, in the degreasing jig circulating apparatus 310, the robot arm 334B functions as a bottom plate delivering mechanism.

Here, the bottom plate 101 from which, after the next process (for example, firing process), the resulting ceramic molded bodies have been taken out may be returned to the degreasing jig assembling apparatus 311 through a conveyor.

Here, the degreasing furnace 351 and the cover member transporting conveyor 361, which comprises the degreasing jig circulating apparatus 310, respectively have the same structures as the degreasing furnace 151 and the cover member transporting conveyor 161 comprising the degreasingjig circulating apparatus 110.

The degreasing jig circulating apparatus of the present invention may have structures as shown in Figs. 10 and 11.
In the degreasing jig circulating apparatus that has been explained, each of the degreasing jig assembling apparatus and the degreasing jig disassembling apparatus that constitute the degreasing jig circulating apparatus is provided with a table or a conveyor in the same embodiment; however, the above-mentioned degreasing jig circulating apparatus may be comprised of a degreasing jig assembling apparatus and a degreasing jig disassembling apparatus that are provided with respectively different tables or conveyors.
Inotherwords, for example, the degreasing jig circulating apparatus may be comprised of a degreasing jig assembling apparatus provided with a rotation table and a degreasing jig disassembling apparatus provided with a jig disassembling belt conveyor, or may be comprised of a degreasing jig assembling apparatus provided with a jig assembling belt conveyor and a degreasing jig disassembling apparatus provided with a jig disassembling pallet conveyor.

The degreasing jig circulating apparatus of the present invention, which has the above-mentioned structure, makes it possible to automatically carry out a sequence of processes including a process for placing a ceramic molded body on the degreasing jig, a degreasing process, a disassembling process of the degreasing jig, a process for transporting a cover member to the degreasing jig assembling apparatus and a process for transporting the bottom plate to the post process; therefore, it becomes possible to degrease the ceramic molded body efficiently without the need for manual labor, and also to utilize the cover member repeatedly.

The following description will discuss a method for degreasing a ceramic molded body in accordance with the present invention.
The method for degreasing a ceramic molded body of the present invention is a method for degreasing a ceramic molded body comprising degreasing the ceramic molded body by passing a degreasing jig on which the ceramic molded body is mounted through inside of a degreasing furnace, using a degreasing jig circulating apparatus, the degreasing jig circulating apparatus comprising: a degreasing jig assembling apparatus comprising a robot arm, and a table or a conveyor on which the degreasing jig comprising a bottom plate and a cover member is placed, the ceramic molded body being mounted on the degreasing jig upon degreasing the ceramic molded body, the ceramic molded body being mounted on the degreasing jig on the table or the conveyor; the degreasing furnace that degreases the ceramicmoldedbodymounted on the degreasing jig; a degreasing jig disassembling apparatus comprising a robot arm, and a table or a conveyor on which the degreasing jig is placed, the degreasing jig on which the ceramic molded body is mounted being disassembled on the table or the conveyor; a cover member transporting conveyor that transports the cover member that has been detached by the degreasing jig disassembling apparatus to the degreasing jig assembling apparatus; and a bottom plate transporting conveyor that transports the bottom plate on which the ceramic molded body is mounted, with the cover member being detached, wherein the degreasing jig assembling apparatus comprising: a molding body mounting mechanism that mounts the ceramic molded body at a predetermined position on the bottom plate placed on the table or the conveyor by using the robot arm; a cover member attaching mechanism that attaches the cover member to the bottom plate in a manner so as to cover the ceramic molded body mounted on the bottom plate; and a jig delivering mechanism that delivers the degreasing jig on which the ceramic molded body is mounted to the degreasing furnace, the degreasing jig disassembling apparatus comprising: a jig receiving mechanism that receives the degreasing jig on which the ceramic molded body is mounted from the degreasing furnace; a cover member detaching mechanism that detaches the cover member attached in a manner so as to cover the ceramic molded body mounted on the bottom plate placed on the table or the conveyor, by using the robot arm; and a bottom plate delivering mechanism that delivers the bottom plate on which the ceramic molded body is mounted, with the cover member being detached, to the bottom plate transporting conveyor.

In the method for degreasing a ceramic molded body of the present invention, the ceramic molded body is degreased by using a degreasing jig circulating apparatus. Here, with respect to the degreasing jig circulating apparatus, the aforementioned degreasing jig circulating apparatus of the present invention can be desirably used.
The following description will discuss desirable degreasing conditions and the like by exemplifying a case in which a pillar-shaped honeycomb molded body having a large number of cells longitudinally placed in parallel with one another with a cell wall therebetween is used as the ceramic molded body that is an object to be degreased.
Of course, with respect to the object to be degreased in the degreasing method of the present invention, not limited to the honeycomb molded body, various ceramic molded bodies may be used as the object to be degreased.

In the degreasing method of the present invention, first, a honeycomb molded body is carried in a degreasing jig assembling apparatus, and the honeycomb molded body is mounted on the degreasing jig in the degreasing jig assembling apparatus.
With respect to the method of mounting the honeycomb molded body onto the degreasing jig in the degreasing jig assembling apparatus, the same method as the method explained in the degreasing jig assembling apparatus of the present invention is used; therefore, the description thereof is omitted.

Next, the honeycomb molded body held by the degreasing jig is carried into a degreasing furnace, and degreased.
Specific degreasing conditions are not generally determined since they are varied depending on the size, shape and the like of the honeycomb molded body; however, for example, when the size of the honeycomb molded body is set in a range of 34 mm × 34 mm × 15 to 40 mm, it is desirable to place honeycomb molded bodies mutually with intervals of 5 to 8 mm, and to carry out a degreasing process at a temperature in a range from 200 to 500°C for 2 to 4 hours.

Next, the degreasing jig with the degreased honeycomb molded bodies being mounted thereon is transported to the degreasing jig disassembling apparatus where the cover member is detached from the bottom plate on which the honeycomb molded bodies are placed, and the cover member is transported to the cover member transporting conveyor, while the honeycomb molded bodies which are being placed on the bottom plate are carried out to an apparatus used in the next process; thus, the degreasing process of the honeycomb molded bodies is completed.
With respect to the method of detaching the cover member from the bottom plate in the degreasing jig disassembling apparatus, the same method as the method explained in the description of the degreasing jig disassembling apparatus of the present invention is used; therefore, the description thereof is omitted.

The cover member, detached in the degreasing jig disassembling apparatus, is returned to the degreasing jig assembling apparatus through the cover member transporting conveyor.
Therefore, the cover member can be utilized repeatedly.
Here, with respect to the structure of the cover member transporting conveyor, the explanation has already been given in the description of the degreasing jig circulating apparatus of the present invention; therefore, the description thereof is omitted.

Moreover, the bottom plate of the degreasing jig to be used in the degreasing method of the present invention is desirably configured so as to be also used as the firing jig.
Normally, the honeycomb molded body after degreasing process have been carried out thereon is successively fired; however, upon completion of the degreasing process, the honeycomb molded body is fragile and easily damaged, and it is not desirable to grasp the honeycomb molded body so as to move it to the firing jig after the degreasing process.
Therefore, the cover member is desirably detached with the degreased honeycomb molded bodies being mounted on the bottom plate comprising the degreasing jig, and a frame-shaped side wall member, which forms side walls, is placed on the bottom plate to form a firing jig, and firing jigs, each having this structure, are desirably stacked, thereby carrying out a firing process.

In the method for degreasing a ceramic molded body of the present invention having the above-mentioned arrangement, since the degreasingjig assembling apparatus,the degreasingfurnace, the degreasing jig disassembling apparatus, the cover member transporting conveyor and the bottomplate transporting conveyor are used, it becomes possible to automatically carry out a sequence of processes including a process for placing a ceramic molded body on the degreasing jig, a degreasing process, a disassembling process of the degreasing jig, a process for transporting a cover member to the degreasing jig assembling apparatus and a process for transporting the bottom plate to a post process, and consequently to degrease the ceramic molded body efficiently without the need for manual labor.

The following description will discuss a method for manufacturing a honeycomb structured body in accordance with the present invention.
The method for manufacturing a honeycomb structured body of the present invention is a method for manufacturing a honeycomb structured body comprising a honeycomb fired body, including: producing a pillar-shaped honeycomb molded body having a large number of cells longitudinally placed in parallel with one another with a cell wall therebetween by molding a ceramic material, degreasing the honeycomb molded body mounted on a degreasing jig; and firing the degreased honeycomb molded body to manufacture a honeycomb fired body, wherein the degreasing of the honeycomb molded body is carried out by using a degreasing jig circulating apparatus, the degreasing jig circulating apparatus comprising: a degreasing jig assembling apparatus comprising a robot arm, and a table or a conveyor on which a degreasing jig comprising a bottom plate and a cover member is placed, a honeycomb molded body being mounted on the degreasing jig upon degreasing the honeycomb molded body, the honeycomb molded body being mounted on the degreasing jig on the table or the conveyor; a degreasing furnace that degreases the honeycomb molded body mounted on the degreasing jig; a degreasing jig disassembling apparatus comprising a robot arm, and a table or a conveyor on which the degreasing jig is placed, the degreasing jig on which the honeycomb molded body is mounted being disassembled on the table or the conveyor; a cover member transporting conveyor that transports the cover member that has been detached by the degreasing jig disassembling apparatus to the degreasing jig assembling apparatus; and a bottom plate transporting conveyor that transports the bottom plate on which the honeycomb molded body is mounted, with the cover member being detached, the degreasing jig assembling apparatus comprising: a molding body mounting mechanism that mounts the honeycomb molded body at a predetermined position on the bottom plate placed on the table or the conveyor by using the robot arm; a cover member attaching mechanism that attaches the cover member to the bottom plate in a manner so as to cover the honeycomb molded body mounted on the bottom plate; and a jig delivering mechanism that delivers the degreasing jig on which the honeycomb molded body is mounted to the degreasing furnace, the degreasing jig disassembling apparatus comprising: a jig receiving mechanism that receives the degreasing jig on which the honeycomb molded body is mounted from the degreasing furnace; a cover member detaching mechanism that detaches the cover member attached in a manner so as to cover the honeycomb molded body mounted on the bottom plate placed on the table or the conveyor, by using the robot arm; and a bottom plate delivering mechanism that delivers the bottom plate on which the honeycomb molded body is mounted, with the cover member being detached, to the bottom plate transporting conveyor.

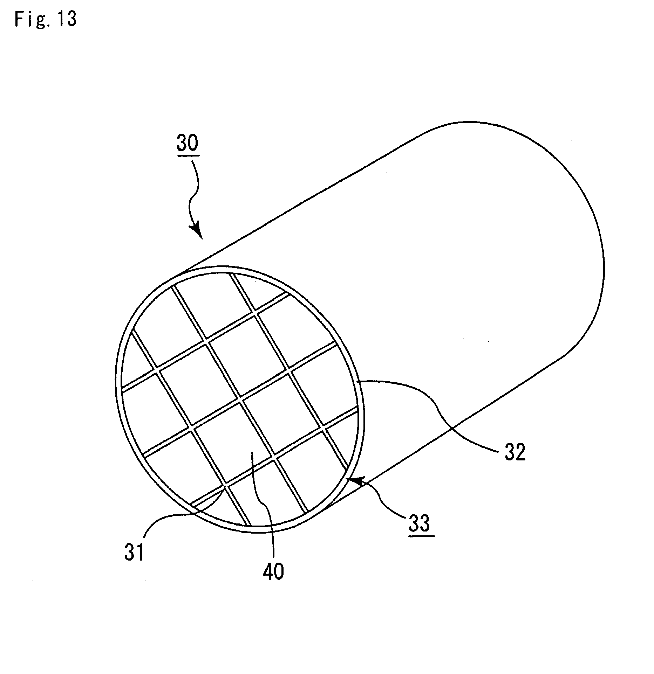

The honeycomb structured body to be manufactured by using the manufacturing method of the present invention may be comprised of a honeycomb fired body formed by firing a honeycomb molded body having a large number of cells longitudinally placed in parallel with one another with a cell wall therebetween. Therefore, the honeycomb structured body may have a structure in which pillar-shaped honeycomb molded bodies, each having a large number of cells longitudinally placed in parallel with one another with a cell wall therebetween, are fired and a plurality of the resulting honeycomb fired bodies are combined with one another by interposing sealing material layers (adhesive layers) (see Fig. 13), or may be a pillar shaped honeycomb structured body comprised of a single honeycomb sintered body obtained by firing a honeycomb molded body having a large number of cells longitudinally placed in parallel with one another with a cell wall therebetween. In the present specification, the former honeycomb structured body in which a plurality of honeycomb fired bodies are combined with one another by interposing sealing material layers (adhesive layers) is referred to as an aggregated honeycomb structured body, and the latter pillar-shaped honeycomb structured body comprised of a single honeycomb sintered body is referred to as an integral honeycomb structured body.

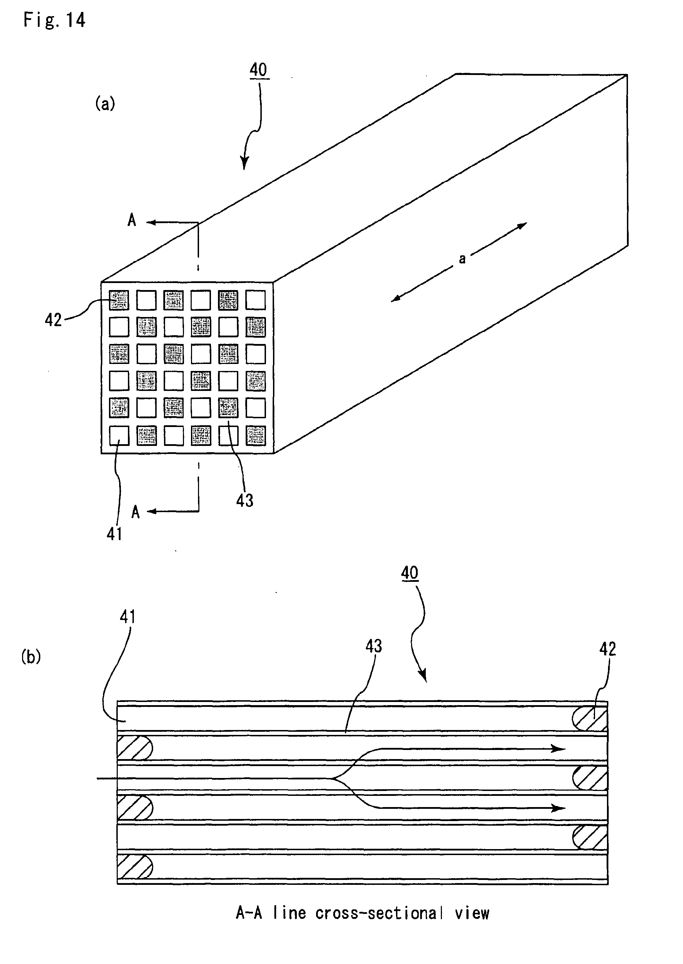

Fig. 13 is a perspective view that schematically shows one example of a honeycomb structured body, Fig. 14(a) is a perspective view that schematically shows a honeycomb fired body used for forming the honeycomb structured body, and Fig. 14(b) is a cross-sectional view taken along line A-A.

In the honeycomb structured body 30, a plurality of honeycomb fired bodies 40 as shown in Fig. 14(a) are bound to one another by interposing sealing material layers (adhesive layers) 31 to form a honeycomb block 33, and a sealing material layer (coat layer) 32 is further formed on the outer periphery of this honeycomb block 33.
Moreover, as shown in Figs. 14(a) and 14(b), the honeycomb fired body 40 has a large number of cells 41 longitudinally placed in parallel with one another (see "a" in Fig. 14(a)) so that each cell wall 43 that separates the cells 41 is allowed to function as a filter.

In other words, as shown in Fig. 14(b), each of the cells 41, formed in the honeycomb firedbody 40, is sealed with a plugging material layer 42 at either one of ends on its exhaust gas inlet side and exhaust gas outlet side so that exhaust gases that have entered one cell 41 are discharged from another cell 41 after having always passed through each cell wall 43 that separates the cells 41; thus, when exhaust gases pass through the cell wall 43, particulates are captured by the cell wall 43 so that the exhaust gases are purified.

With respect to the main component of a material for the honeycomb structured body to be manufactured by the manufacturing method of the present invention, examples thereof include: nitride ceramic materials, such as aluminum nitride, silicon nitride, boron nitride and titanium nitride, carbide ceramic materials, such as silicon carbide, zirconium carbide, titanium carbide, tantalum carbide and tungsten carbide, and oxide ceramic materials, such as alumina, zirconia, cordierite, mullite, aluminum titanate, and the like. Among these, powder of silicon carbide that has a high heat resistant property, superior mechanical properties and a high thermal conductivity is desirably used. Here, materials, such as a silicon-containing ceramic material obtained by blending metal silicon in the above-mentioned ceramic material and a ceramic material that is combined by silicon or a silicate compound, may also be used, and for example, a material in which metal silicon is blended in silicon carbide is desirably used.
The following description will discuss the method for manufacturing a honeycomb structured body of the present invention by exemplifying the method for manufacturing a honeycomb structured body mainly composed of silicon carbide in the order of successive processes.

First, inorganic powder, such as silicon carbide powders having different average particle diameters, and an organic binder are dry-mixed to prepare mixed powder, and a liquid-state plasticizer, a lubricant and water are mixed to prepare a mixed liquid, and the mixed powder and the mixed liquid are mixed by using a wet-mixing device so that a wet mixture for use in manufacturing a molded body is prepared.

With respect to the particle diameter of the silicon carbide powder, although not particularly limited, those which are less susceptible to shrinkage in the succeeding firing process are desirably used, and for example, mixed powder, prepared by combining 100 parts by weight of powder having an average particle diameter from 0.3 to 50 µm with 5 to 65 parts by weight of powder having an average particle diameter from 0.1 to 1.0 µm, is desirably used.
In order to adjust the pore diameter and the like of the honeycomb fired body, it is necessary to adjust the firing temperature; however, the pore diameter can be adjusted by adjusting the particle diameter of the inorganic powder.

With respect to the above-mentioned organic binder, not particularly limited, examples thereof include: methyl cellulose, carboxymethyl cellulose, hydroxyethyl cellulose, polyethylene glycol and the like. Among these, methylcellulose is more desirably used.
In general, the compounding amount of the above-mentioned binder is desirably set to 1 to 10 parts by weight with respect to 100 parts by weight of the inorganic powder.

With respect to the above-mentioned plasticizer, not particularly limited, for example, glycerin and the like may be used.
Moreover, with respect to the lubricant, not particularly limited, for example, polyoxyalkylene-based compounds, such as polyoxyethylene alkyl ether and polyoxy propylene alkyl ether, may be used.
Specific examples of the lubricant include: polyoxyethylene monobutyl ether, polyoxypropylene monobutyl ether and the like.
Here, the plasticizer and the lubricant are not necessarily contained in the mixed liquid depending on cases.

Upon preparing the wet mixture, a dispersant solution may be used, and with respect to the dispersant solution, examples thereof include: water, an organic solvent such as benzene, alcohol such as methanol, and the like.
Moreover, a molding auxiliary may be added to the wet mixture.
With respect to the molding auxiliary, not particularly limited, examples thereof include: ethylene glycol, dextrin, fatty acid, fatty acid soap, polyalcohol and the like.

Furthermore, a pore forming agent, such as balloons that are fine hollow spheres composed of oxide-based ceramics, spherical acrylic particles and graphite, may be added to the above-mentioned wet mixture, if necessary.
With respect to the above-mentioned balloons, not particularly limited, for example, alumina balloons, glass micro-balloons, shirasu balloons, fly ash balloons (FA balloons), mullite balloons and the like may be used. Among these, alumina balloons are more desirably used.

Here, with respect to the wet mixture using silicon carbide powder, prepared as described above, the temperature thereof is desirably set to 28°C or less. When the temperature is too high, the organic binder tends to gelate.
Moreover, the rate of organic components in the wet mixture is desirably set to 10% by weight or less, and the content of moisture is desirably set from 8 to 20% by weight.

Next, the wet mixture is extrusion-molded by an extrusion-molding method and the like. The molded body obtained through the extrusion molding is cut by a cutting machine so that a honeycomb molded body, which has the same shape as the pillar-shaped honeycomb fired body 40 shown in Figs. 14(a) and 14(b), and has no plugged cells, is manufactured.

Next, with respect to the honeycomb molded body, a predetermined amount of plug material paste that forms plugs is filled into either one of the ends of each cell, if necessary, so that predetermined cells are sealed.
More specifically, upon manufacturing a honeycomb structured body that functions as a ceramic filter, either one of the ends of each cell is sealed.
Moreover, prior to the plugging process of the honeycomb molded body, a drying process may be carried out thereon, if necessary, and in this case, the drying process may be carried out by using a drying apparatus, such as a microwave drying apparatus, a hot-air drying apparatus, a reduced-pressure drying apparatus, a dielectric drying apparatus and a frozen drying apparatus.

With respect to the plug material paste, although not particularly limited, those plug material pastes that allow the plugs manufactured through post processes to have a porosity in a range from 30 to 75% are desirably used, and, for example, the same material as that of the wet mixture may be used.

The filling process of the plug material paste can be carried out on demand, and when the plug material paste has been filled thereto, for example, the resulting honeycomb structured body obtained through the post process is desirably used as a honeycomb filter, and in the case where no plug material paste has been filled thereto, for example, the honeycomb structured body obtained through the post process is desirably used as a catalyst supporting carrier.

Next, a degreasing process is carried out on the honeycomb molded body with the plug material paste filled therein, by using a degreasing jig circulating apparatus.
With respect to the degreasing method by the use of the degreasing jig circulating apparatus, since the explanation has been given as the degreasing method of the present invention, the description thereof is omitted.

Next, the honeycomb molded body on which the degreasing process has been carried out is fired under predetermined conditions (for example, at 1400 to 2300°C) so that a pillar-shaped honeycomb fired body having a plurality of cells longitudinally placed in parallel with one another with a cell wall therebetween, with either one of the ends of each cell being sealed, is manufactured.
Here, with respect to the firing conditions for the honeycomb molded body, those conditions conventionally used upon manufacturing a filter made from a porous ceramic material may be used.

In this case, upon carrying out the firing process, after the completion of the degreasing process, the degreased honeycomb molded body that has been placed on the bottom plate of the degreasing jig, as it is, is desirably transported to a firing apparatus so that the firing process is carried out on the honeycomb molded body. The reasons for this arrangement are the same as those described earlier.
Therefore, the bottom plate of the degreasing jig to be used in the manufacturing method of the present invention is desirably configured to be also used as a firing jig. Moreover, the bottom plate transporting conveyor, which comprises the degreasing jig circulating apparatus, is desirably configured so as to also transport the bottom plate on which the honeycomb molded body that has been degreased is mounted, with its cover member detached, to the firing process (firing apparatus).

Referring to the drawings, the following description will discuss these degreasing process and firing process in more detail.

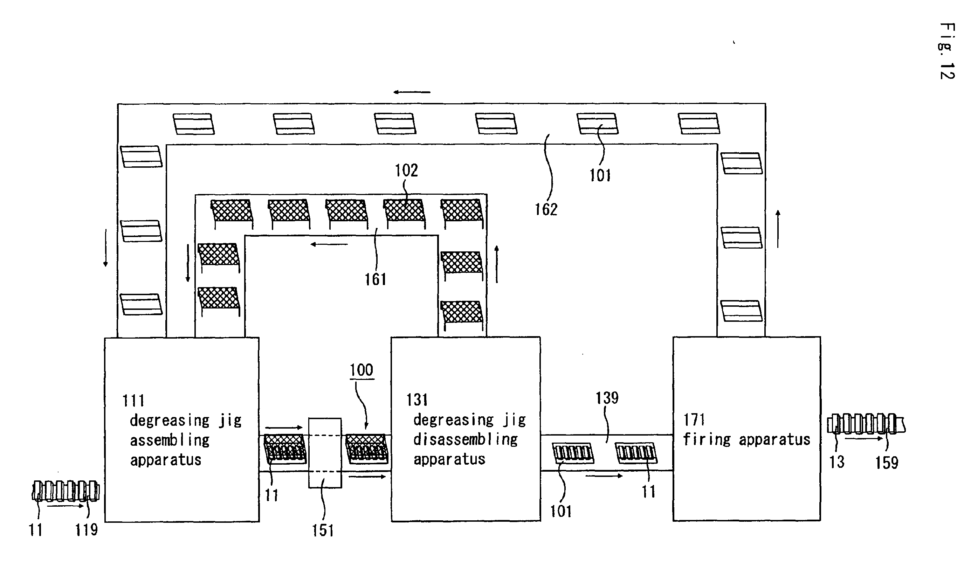

Fig. 12 is an explanatory drawing that schematically shows examples of the firing process and the degreasing process in the manufacturing method of the present invention.

As shown in Fig. 12, in the degreasing process and the firing process of the manufacturing method of the present invention, a honeycomb molded body 11, which has been transported by a molded body carry-in conveyor 119 from the preceding process (for example, the plug material paste filling process) by the molded body carry-in conveyor 119, is first mounted on a degreasing jig 100 in the degreasing jig assembling apparatus 111 that has already been explained.
Thus, the honeycomb molded body 11, mounted on the degreasing jig 100, is degreased in the degreasing furnace 151, and further transported to the degreasing jig disassembling apparatus 131 that has already been explained. In the degreasing jig disassembling apparatus 131, the covermember 102 is detached from the bottom plate 101, and the honeycomb molded body 11 in its placed state on the bottom plate 101 is transported to a firing apparatus 171 by a bottom plate transporting conveyor 139. Moreover, the cover member is returned from the degreasing jig disassembling apparatus 131 to the degreasing jig assembling apparatus 111 by the cover member transporting conveyor 161.

The honeycomb molded body 11, transported to the firing apparatus 171, in its placed state on the bottom plate 101, is fired in the firing apparatus 171 under predetermined conditions. Thereafter, the resulting honeycomb fired body 13 is taken out of the firing jig (not shown) including the bottom plate 101, and transported to an apparatus used in the next process by a conveyor 159.
Here, after the honeycomb fired body 13 has been taken out, the bottom plate 101 is returned from the firing apparatus to the degreasing jig assembling apparatus by the cover member transporting conveyor 161.
By carrying out these degreasing process and firing process, the degreasing jig, comprised of the bottom plate and the cover member, can be used repeatedly, and since the honeycomb molded body that has been degreased need not be grasped to be transported, the degreasing process and the firing process can be desirably carried out.

In this case, the degreasing process and the firing process have been explained by using the degreasing jig assembling apparatus 111 shown in Fig. 1 as the degreasing jig assembling apparatus, as well as by using the degreasing jig disassembling apparatus 131 shown in Fig. 7 as the degreasing jig disassembling apparatus; however, in the present processes, the degreasing jig assembling apparatus in accordance with the present invention can be used as the degreasing jig assembling apparatus, and the degreasing jig disassembling apparatus in accordance with the present invention can be used as the degreasing jig disassembling apparatus.

Moreover, in the firing apparatus 171, a frame member forming side walls and a lid member are further placed on the bottom plate on which the honeycomb molded body that has been degreased is placed in a manner so as to cover the honeycomb molded body, and the firing process is desirably carried out in a state in which the periphery of the honeycomb molded body is surrounded by the firing jig comprised of the bottom plate, the frame member and the lidmember. Moreover, the firing process may be carried out in a state in which the firing jigs of this kind have been piled up in multiple stages.

Next, an applying process of a sealing material paste serving as a sealing material layer (adhesive layer) onto side faces of the honeycomb fired body with an even thickness, and a piling up process of another honeycomb fired body onto this sealing material paste layer is successively repeated so that an aggregate of honeycomb fired bodies having a predetermined size is manufactured.

With respect to the sealing material paste, examples thereof include a material made from an inorganic binder, an organic binder and inorganic fibers and/or inorganic particles.
With respect to the inorganic binder, for example, silica sol, alumina sol and the like may be used. Each of these may be used alone or two or more kinds of these may be used in combination. Among the inorganic binders, silica sol is more desirably used.

With respect to the organic binder, examples thereof include polyvinyl alcohol, methyl cellulose, ethyl cellulose, carboxymethyl cellulose and the like. Each of these may be used alone or two or more kinds of these may be used in combination. Among the organic binders, carboxymethyl cellulose is more desirably used.

With respect to the inorganic fibers, examples thereof include ceramic fibers, such as silica-alumina, mullite, alumina and silica. Each of these may be used alone or two or more kinds of these may be used in combination. Among the inorganic fibers, alumina fibers are more desirably used.

With respect to the inorganic particles, examples thereof include carbides, nitrides and the like, and specific examples include inorganic powder and the like made from silicon carbide, silicon nitride and boron nitride. Each of these may be used alone, or two or more kinds of these may be used in combination. Among the inorganic particles, silicon carbide having superior thermal conductivity is desirably used.

Moreover, a pore forming agent, such as balloons that are fine hollow spheres composed of an oxide-based ceramic material, spherical acrylic particles and graphite, may be added to the above-mentioned sealing material paste, if necessary.
With respect to the above-mentioned balloons, not particularly limited, for example, alumina balloons, glass micro-balloons, shirasu balloons, fly ash balloons (FA balloons), mullite balloons and the like may be used. Among these, alumina balloons are more desirably used.

Next, this aggregate of honeycomb fired bodies is heated so that the sealing material paste layers are dried and solidified to form sealing material layers (adhesive layers).
Next, the aggregate of honeycomb fired bodies in which a plurality of honeycomb fired bodies have been combined with one another by interposing sealing material layers (adhesive layers) is cut by using a diamond cutter or the like so that a cylindrical honeycomb block is manufactured.

Then, a sealing material layer (coat layer) is formed on the periphery of the honeycomb block by using the above-mentioned sealing material paste so that a honeycomb structured body in which a sealing material layer (coat layer) is formed on the periphery of a cylindrical honeycomb block having a structure in which a plurality of honeycomb fired bodies are combined with one another by interposing sealing material layers (adhesive layers) is manufactured.

Thereafter, a catalyst is supported on the honeycomb structured body on demand. The supporting process of the catalyst may be carried out on the honeycomb fired bodies prior to being formed into an aggregate.
In the case where a catalyst is supported thereon, an alumina film having a high specific surface area is desirably formed on the surface of the honeycomb structured body, and a co-catalyst and a catalyst such as platinum are applied onto the surface of the alumina film.

With respect to the method for forming the alumina film on the surface of the honeycomb structured body, for example, a method in which the honeycomb structured body is impregnated with a solution of a metal compound containing aluminum such as Al(NO₃)₃ and then heated and a method in which the honeycomb structured body is impregnated with a solution containing alumina powder and then heated, are proposed.
With respect to the method for applying a co-catalyst to the alumina film, for example, a method in which the honeycomb structured body is impregnated with a solution of a metal compound containing a rare-earth element, such as Ce(NO₃)₃, and then heated is proposed.
With respect to the method for applying a catalyst to the alumina film, for example, a method in which the honeycomb structured body is impregnated with a solution of diammine dinitro platinum nitric acid ([Pt(NH₃)₂(NO₂)₂]HNO₃, platinum concentration: 4.53% by weight) and then heated is proposed.
Moreover, a catalyst may be applied through a method in which after the catalyst has been preliminarily applied to alumina particles, the honeycomb structured body is impregnated with a solution containing the alumina powder bearing the catalyst applied thereto, and then heated.

Here, the above-mentioned method for manufacturing a honeycomb structured body relates to an aggregated honeycomb structured body; however, the honeycomb structured body to be manufactured by the method of the present invention may be a honeycomb structured body (an integral honeycomb structured body) in which a pillar-shaped honeycomb block comprises one honeycomb fired body.
Here, desirably, the aggregated honeycomb structured body is mainly composed of silicon carbide or a material formed by blending metal silicon in silicon carbide, and desirably, the integral honeycomb structured body is mainly composed of a material such as cordierite and aluminum titanate.

Upon manufacturing such an integral honeycomb structured body, first, a honeycomb molded body of this kind is formed by using the same method as the manufacturing method for an aggregated honeycomb structured body except that the size of a honeycomb molded body to be molded through the extrusion-molding process is more than that in the case of the aggregated honeycomb structured body.

Next, in the same manner as the manufacturing method for the aggregated honeycomb structured body, a drying process and a plug material paste filling process are carried out, if necessary, and degreasing and firing processes are carried out in the same manner as the manufacturing method for the aggregated honeycomb structured body so that a honeycomb block is manufactured, and sealing material layers (coat layers) are formed, if necessary, so that an integral honeycomb structured body can be manufactured. Moreover, a catalyst may be supported on the integral honeycomb structured body as well, by using the above-mentioned method.

By using the above-mentioned method for manufacturing the honeycomb structured body of the present invention, it is possible to desirably manufacture a honeycomb structured body having a predetermined shape.
With respect to the honeycomb structured body, the foregoing explanation has been given mainly on a honeycomb filter that is used for collecting particulates in exhaust gases; however, the honeycomb structured body may also be desirably used as a catalyst supporting carrier (honeycomb catalyst) that purifies exhaust gases.

### EXAMPLES

### (Example 1)

Powder of α-type silicon carbide having an average particle diameter of 10 µm (250 kg), powder of α-type silicon carbide having an average particle diameter of 0.5 µm (100 kg) and an organic binder (methyl cellulose) (20 kg) were mixed to prepare a mixed powder.
Next, separately, a lubricant (Uniloop, made by NOF Corp.) (12 kg), a plasticizer (glycerin) (5 kg) and water (65 kg) were mixed to prepare a liquid mixture, and this liquid mixture and the mixed powder were mixed by using a wet mixing machine so that a wet mixture was prepared.

Next, this wet mixture was transported to an extrusion molding machine by using a transporting apparatus, and charged into a raw material charging port of the extrusion molding apparatus.
The wet mixture was then extrusion-molded into a molded body having the same shape as shown in Figs. 14(a) and 14(b) except that ends of the cells had not been sealed.

Next, after the honeycomb molded body had been dried by using a drying apparatus in which microwaves and hot air were used in combination, and a plug material paste having the same composition as the wet mixture was filled into predetermined cells.

Next, a degreasing process and a firing process were carried out on the honeycomb molded body by using the degreasing jig circulating apparatus 210 of the present invention and a firing apparatus (see Figs. 10 and 12).
Here, the degreasing conditions were set to 400°C for 3 hours. At this time, the respective honeycomb molded bodies were placed on the bottom plate of the degreasing jig with an interval of 6 mm.
Moreover, the firing conditions were set to 2200°C for 3 hours under a normal-pressure argon atmosphere.
After these degreasing and firing processes, a honeycomb fired body, made of a silicon carbide sintered body, which had a porosity of 40%, an average pore diameter of 12.5 µm, a size of 34.3 mm × 34.3 mm × 254 mm, the number of cells (cell density) of 46.5/cm² and a thickness of each cell wall of 0.25 mm, was manufactured.

Moreover, in the degreasing jig circulating apparatus 210, both of a jig assembling belt conveyor 212 comprising a degreasing jig assembling apparatus 211 and a jig disassembling belt conveyor 232 comprising a degreasing jig disassembling apparatus 231 were being intermittently moved.
More specifically, upon transporting, the belt conveyors were moved at a moving speed of 3.0 m/min, and upon shifting from the moving state to the stopped state, the moving speed of 3.0 m/min was first lowered to a moving speed of 0.5 m/min (moving speed before the stoppage), and the belt conveyers then shifted to stopped state.

By using a heat resistant sealingmaterial paste containing 30% by weight of alumina fibers having an average fiber length of 20 µm, 21% by weight of silicon carbide particles having an average particle diameter of 0.6 µm, 15% by weight of silica sol, 5.6% by weight of carboxymethyl cellulose and 28.4% by weight of water, a large number of the honeycomb fired bodies were bonded to one another, and dried at 120°C, and then cut by using a diamond cutter so that a cylindrical honeycomb block having a sealing material layer (adhesive layer) with a thickness of 1.0 mm was manufactured.

Next, silica-alumina fibers (average fiber length: 100 µm, average fiber diameter: 10 µm) (23.3% by weight), which served as inorganic fibers, silicon carbide powder having an average particle diameter of 0.3 µm (30.2% by weight), which served as inorganic particles, silica sol (SiO₂ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste.

Next, a sealing material paste layer having a thickness of 0.2 mm was formed on the peripheral portion of the honeycomb block by using the above-mentioned sealing material paste.
Further, this sealing material paste layer was dried at 120°C so that a cylindrical honeycomb structured body having a size of 143.8 mm in diameter × 254 mm in length, with a sealing material layer (coat layer) formed on the outer periphery, was manufactured.

By using the method of the present example, a honeycomb structured body having a desired shape was manufactured.
Moreover, in the present example, after the cover member had been detached, the degreased honeycomb molded body was visually observed, and no honeycomb molded body having defects such as cracks was found. Here, the number of samples for the visual observation was 300 pcs (pieces).

### (Example 2)

By carrying out basically the same processes as those up to the manufacture of the honeycomb fired body of Example 1, a honeycomb fired body was manufactured.
Provided that, the intermittent moving embodiments of the jig assembling belt conveyor 212 comprising a degreasing jig assembling apparatus 211 and the jig disassembling belt conveyor 232 comprising a degreasing jig disassembling apparatus 231 in the degreasing jig circulating apparatus 210 were changed as follows: upon transporting, the belt conveyors were moved at a moving speed of 3.0 m/min, and upon shifting from the moving state to the stopped state, the moving speed of 3.0 m/min was first lowered to a moving speed of 1.5 m/min (moving speed before the stoppage), and the belt conveyers then shifted to stopped state.

In the present example, after the cover member had been detached, the degreased honeycomb molded body was visually observed, and no honeycomb molded body having defects such as cracks was found. Here, the number of samples for the visual observation was 300 pcs.

### (Example 3)

By carrying out basically the same processes as those up to the manufacture of the honeycomb fired body of Example 1, a honeycomb fired body was manufactured.
Provided that, the intermittent moving embodiments of the jig assembling belt conveyor 212 comprising a degreasing jig assembling apparatus 211 and the jig disassembling belt conveyor 232 comprising a degreasing jig disassembling apparatus 231 in the degreasing jig circulating apparatus 210 were changed as follows: upon transporting, the belt conveyors were moved at a moving speed of 3.0 m/min, and upon shifting from the moving state to the stopped state, the moving speed of 3.0 m/min was first lowered to a moving speed of 0.05 m/min (moving speed before the stoppage), and the belt conveyers then shifted to stopped state.

Moreover, in the present example, after the cover member had been detached, the degreased honeycomb molded body was visually observed, and no honeycomb molded body having defects such as cracks was found. Here, the number of samples for the visual observation was 300 pcs.

### (Reference Example 1)

By carrying out basically the same processes as those up to the manufacture of the honeycomb fired body of Example 1, a honeycomb fired body was manufactured.
Provided that, the intermittent moving embodiments of the jig assembling belt conveyor 212 comprising a degreasing jig assembling apparatus 211 and the jig disassembling belt conveyor 232 comprising a degreasing jig disassembling apparatus 231 in the degreasing jig circulating apparatus 210 were changed as follows: upon transporting, the belt conveyors were moved at a moving speed of 3.0 m/min, and upon shifting from the moving state to the stopped state, the belt conveyors shifted directly to the stopped state without being temporarily reduced to a moving speed before the stoppage.

Moreover, in the present reference example, after the cover member had been detached, the degreased honeycomb molded body was visually observed, and it was found that 1% (three) of the honeycomb molded bodies had defects such as cracks. Here, the number of samples for the visual observation was 300 pcs.

### BRIEF DESCRIPTIONS OF THE DRAWINGS

Fig. 1 is a conceptual view that schematically shows the outline of a degreasing jig assembling apparatus in accordance with the present invention.
Fig. 2 is an exploded perspective view showing a degreasing jig.
Fig. 3 is a perspective view that shows one example of a robot arm forming a molded body mounting mechanism.
Fig. 4 is a partial enlarged perspective view of the robot arm shown in Fig. 3.
Fig. 5 is a conceptual view that schematically shows the outline of another example of the degreasing jig assembling apparatus of the present invention.
Fig. 6 is a conceptual view that schematically shows the outline of still another example of the degreasing jig assembling apparatus of the present invention.
Fig. 7 is a conceptual view that schematically shows the outline of a degreasing jig disassembling apparatus in accordance with the present invention.
Figs. 8 (a) and 8(b) are conceptual views that schematically show other examples of the degreasing jig disassembling apparatus of the present invention.
Fig. 9 is a conceptual view that schematically shows the outline of a degreasing jig circulating apparatus in accordance with the present invention.
Fig. 10 is a conceptual view that schematically shows the outline of another example of the degreasing jig circulating apparatus of the present invention.
Fig. 11 is a conceptual view that schematically shows the outline of still another example of the degreasing jig circulating apparatus of the present invention.
Fig. 12 is an explanatory drawing that schematically shows one example of a degreasing process and a firing process in a manufacturing method of the present invention.
Fig. 13 is a perspective view that schematically shows one example of a honeycomb structured body.
Fig. 14 (a) is a perspective view that schematically shows a honeycomb fired body that forms a component member of a honeycomb structured body; and Fig. 14 (b) is a cross-sectional view taken along line A-A.

### EXPLANATION OF SYMBOLS

- 11: Ceramic molded body (honeycomb molded body)
- 13: Honeycomb fired body
- 30: Honeycomb structured body
- 100: Degreasing jig
- 101: Bottom plate
- 102: Cover member
- 110, 210, 310: Degreasing jig circulating apparatus
- 111, 211, 311: Degreasing jig assembling apparatus
- 112, 132: Rotation table
- 113, 213, 313: Robot arm (molded body mounting mechanism)
- 114B, 216, 314B: Robot arm (jig delivering mechanism)
- 115B, 215, 315: Robot arm (cover member attaching mechanism)
- 114A, 115A, 214, 314A: Robot arm
- 131, 231, 331: Degreasing jig disassembling apparatus
- 134A, 234, 334A: Robot arm (jig delivering mechanism)
- 135A, 235, 335: Robot arm (cover member detaching mechanism)
- 134B, 334B: Robot arm (bottom plate delivering mechanism)
- 135B: Robot arm
- 139, 239, 339: Bottom plate transporting conveyor
- 151, 251, 351: Degreasing furnace
- 161, 261, 361: Cover member transporting conveyor
- 212: Jig assembling belt conveyor
- 232: Jig disassembling belt conveyor
- 312: Jig assembling pallet conveyor
- 332: Jig disassembling pallet conveyor

## Claims

1. A degreasing jig assembling apparatus comprising
a robot arm; and
a table or a conveyor on which a degreasing jig comprising a bottom plate and a cover member is placed, a ceramic molded body being mounted on said degreasing jig upon degreasing the ceramic molded body,
said ceramic molded body being mounted on said degreasing jig on said table or said conveyor,
wherein
the degreasing jig assembling apparatus further comprising:
a molding body mounting mechanism that mounts the ceramic molded body at a predetermined position on said bottom plate placed on said table or said conveyor by using said robot arm; and
a covermember attachingmechanismthat attaches said cover member to said bottom plate in a manner so as to cover the ceramic molded body mounted on said bottom plate.

2. The degreasing jig assembling apparatus according to claim 1,
wherein
said conveyor moves intermittently, and upon stopping of said conveyor, said conveyor shifts from a moving state at a moving speed of 1.5 m/min or less to a stopped state.

3. A degreasing jig disassembling apparatus comprising:
a robot arm; and
a table or a conveyor on which a degreasing jig comprising a bottom plate and a cover member is placed, a ceramic molded body being mounted on said degreasing jig upon degreasing the ceramic molded body,
the degreasing jig on which said ceramic molded body is mounted being disassembled on said table or said conveyor,
wherein
the degreasing jig disassembling apparatus further comprising
a cover member detaching mechanism that detaches said cover member attached in a manner so as to cover said ceramic molded body mounted on said bottom plate placed on said table or said conveyor, by using said robot arm.

4. The degreasing jig disassembling apparatus according to claim 3,
wherein
said conveyor moves intermittently, and upon stopping of said conveyor, said conveyor shifts from a moving state at a moving speed of 1.5 m/min or less to a stopped state.

5. A degreasing jig circulating apparatus comprising:
a degreasing jig assembling apparatus comprising a robot arm, and a table or a conveyor on which a degreasing jig comprising a bottom plate and a cover member is placed, a ceramic molded body being mounted on said degreasing jig upon degreasing the ceramic molded body, said ceramic molded body being mounted on said degreasing jig on said table or said conveyor;
a degreasing furnace that degreases the ceramic molded body mounted on the degreasing jig;
a degreasing jig disassembling apparatus comprising a robot arm, and a table or a conveyor on which said degreasing jig is placed, the degreasing jig on which said ceramic molded body is mounted being disassembled on said table or said conveyor;
a cover member transporting conveyor that transports the cover member that has been detached by said degreasing jig disassembling apparatus to said degreasing jig assembling apparatus; and
a bottom plate transporting conveyor that transports the bottom plate on which said ceramic molded body is mounted, with said cover member being detached,
wherein
said degreasing jig assembling apparatus comprising:
a molding body mounting mechanism that mounts the ceramic molded body at a predetermined position on said bottom plate placed on said table or said conveyor by using said robot arm;
a cover member attaching mechanism that attaches said cover member to said bottom plate in a manner so as to cover the ceramic molded body mounted on said bottom plate; and
a jig delivering mechanism that delivers the degreasing jig on which said ceramicmolded body is mounted to saiddegreasing furnace,
said degreasing jig disassembling apparatus comprising:
a jig receiving mechanism that receives the degreasing jig on which said ceramic molded body is mounted from said degreasing furnace;
a cover member detachingmechanism that detaches said cover member attached in a manner so as to cover said ceramic molded body mounted on said bottom plate placed on said table or said conveyor, by using said robot arm; and
a bottom plate delivering mechanism that delivers the bottom plate on which said ceramic molded body is mounted, with said cover member being detached, to said bottom plate transporting conveyor.

6. The degreasing jig circulating apparatus according to claim 5,
wherein
said conveyor in said degreasing jig assembling apparatus and/or said degreasing jig disassembling apparatus moves intermittently, and upon stopping of said conveyor, said conveyor shifts from a moving state at a moving speed of 1.5 m/min or less to a stopped state.

7. A method for degreasing a ceramic molded body comprising
degreasing the ceramic molded body by passing a degreasing jig on which the ceramic molded body is mounted through inside of a degreasing furnace, using a degreasing jig circulating apparatus,
said degreasing jig circulating apparatus comprising:
a degreasing jig assembling apparatus comprising a robot arm, and a table or a conveyor on which the degreasing jig comprising a bottomplate and a cover member is placed, the ceramic molded body being mounted on said degreasing jig upon degreasing the ceramic molded body, said ceramic molded body being mounted on said degreasing jig on said table or said conveyor;
the degreasing furnace that degreases the ceramic molded body mounted on the degreasing jig;
a degreasing jig disassembling apparatus comprising a robot arm, and a table or a conveyor on which said degreasing jig is placed, the degreasing jig on which said ceramic molded body is mounted being disassembled on said table or said conveyor;
a cover member transporting conveyor that transports the cover member that has been detached by said degreasing jig disassembling apparatus to said degreasing jig assembling apparatus; and
a bottom plate transporting conveyor that transports the bottom plate on which said ceramic molded body is mounted, with said cover member being detached,
wherein
said degreasing jig assembling apparatus comprising:
a molding body mounting mechanism that mounts the ceramic molded body at a predetermined position on said bottom plate placed on said table or said conveyor by using said robot arm;
a cover member attachingmechanismthat attaches said cover member to said bottom plate in a manner so as to cover the ceramic molded body mounted on said bottom plate; and
a jig delivering mechanism that delivers the degreasing jig on which said ceramic molded body is mounted to said degreasing furnace,
said degreasing jig disassembling apparatus comprising:
a jig receiving mechanism that receives the degreasing jig on which said ceramic molded body is mounted from said degreasing furnace;
a covermember detachingmechanismthat detaches said cover member attached in a manner so as to cover said ceramic molded body mounted on said bottom plate placed on said table or said conveyor, by using said robot arm; and
a bottom plate delivering mechanism that delivers the bottom plate on which said ceramic molded body is mounted, with said cover member being detached, to said bottom plate transporting conveyor.

8. The method for degreasing a ceramic molded body according to claim 7,
wherein
said conveyor in said degreasing jig assembling apparatus and/or said degreasing jig disassembling apparatus moves intermittently, and upon stopping of said conveyor, saidconveyor shifts from a moving state at a moving speed of 1.5 m/min or less to a stopped state.

9. The method for degreasing a ceramic molded body according to claim 7 or 8,
wherein
said bottom plate is also used as a firing jig.

10. A method for manufacturing a honeycomb structured body comprising a honeycomb fired body, including:
producing a pillar-shaped honeycomb molded body having a large number of cells longitudinally placed in parallel with one another with a cell wall therebetween by molding a ceramic material,
degreasing the honeycomb molded body mounted on a degreasing jig; and
firing the degreased honeycomb molded body to manufacture a honeycomb fired body,
wherein
said degreasing of the honeycomb molded body is carried out by using a degreasing jig circulating apparatus, said degreasing jig circulating apparatus comprising:
a degreasing jig assembling apparatus comprising a robot arm, and a table or a conveyor on which a degreasing jig comprising a bottom plate and a cover member is placed, a honeycomb molded body being mounted on said degreasing jig upon degreasing the honeycomb molded body, said honeycomb molded body being mounted on said degreasing jig on said table or said conveyor;
a degreasing furnace that degreases the honeycomb molded body mounted on the degreasing jig;
a degreasing jig disassembling apparatus comprising a robot arm, and a table or a conveyor on which said degreasing jig is placed, the degreasing jig on which said honeycomb molded body is mounted being disassembled on said table or said conveyor;
a cover member transporting conveyor that transports the cover member that has been detached by said degreasing jig disassembling apparatus to said degreasing jig assembling apparatus; and
a bottom plate transporting conveyor that transports the bottom plate on which said honeycomb molded body is mounted, with said cover member being detached,
said degreasing jig assembling apparatus comprising:
a molding body mounting mechanism that mounts the honeycomb molded body at a predetermined position on said bottom plate placed on said table or said conveyor by using said robot arm;
a cover member attaching mechanism that attaches said cover member to said bottom plate in a manner so as to cover the honeycomb molded body mounted on said bottom plate; and
a jig delivering mechanism that delivers the degreasing jig on which said honeycomb molded body is mounted to said degreasing furnace,
said degreasing jig disassembling apparatus comprising:
a jig receiving mechanism that receives the degreasing jig on which said honeycomb molded body is mounted from said degreasing furnace;
a cover member detaching mechanism that detaches said cover member attached in a manner so as to cover said honeycomb molded body mounted on said bottom plate placed on said table or said conveyor, by using said robot arm; and
a bottom plate delivering mechanism that delivers the bottom plate on which said honeycomb molded body is mounted, with said cover member being detached, to said bottom plate transporting conveyor.

11. The method for manufacturing a honeycomb structured body according to claim 10,
wherein
said conveyor in said degreasing jig assembling apparatus and/or said degreasing jig disassembling apparatus moves intermittently, and upon stopping of said conveyor, the conveyor shifts from a moving state at a moving speed of 1.5 m/min or less to a stopped state.

12. The method for manufacturing a honeycomb structured body according to claim 10 or 11,
wherein
said bottom plate is also used as a firing jig.

13. The method for manufacturing a honeycomb structured body according to any of claims 10 to 12,
wherein
said bottom plate transporting conveyor transports the bottom plate on which said honeycomb molded body is mounted, with said cover member being detached, to the firing of the honeycomb molded body.
